# EUROPÄISCHE PATENTSCHRIFT

(11) **EP 3 012 761 B1**
(45) Veröffentlichungstag und Bekanntmachung des Hinweises auf die Patenterteilung: **08.09.2021**
(21) Anmeldenummer: 15190334.1
(22) Anmeldetag: 19.10.2015
(51) Int. Cl.: G06F 21/10

(54) **SCHUTZ VON SOFTWAREMODELLEN**
PROTECTION OF SOFTWARE MODELS
PROTECTION DE MODELES DE LOGICIEL

(30) Priorität: 20.10.2014 US 201462066119 P
(43) Veröffentlichungstag der Anmeldung: 27.04.2016
(73) Patentinhaber: dSPACE digital signal processing and control engineering GmbH, 33102 Paderborn (DE)
(72) Erfinder: Jochheim, Janek, 33102 Paderborn (DE); Krügel, Karsten, 33106 Paderborn (DE); Blömer, Johannes, 33102 Paderborn (DE); Liske, Gennadij, 32051 Herford (DE)

(56) Entgegenhaltungen:
- DE-A1-102007 008 948
- US-A- 5 917 912
- US-A1- 2012 144 210
- US-A1- 2014 143 543

## Beschreibung

Die Erfindung betrifft die Verschlüsselung und Entschlüsselung eines Softwaremodells eines technischen Systems sowie eine entsprechende Verschlüsselungsvorrichtung und Entschlüsselungsvorrichtung. Ferner umfasst die Erfindung ein verschlüsseltes Softwaremodell und eine Umgebung für die Entwicklung eines derartigen Softwaremodells.

Der Begriff des Softwaremodells bezieht sich auf den Prozess des computergestützten Entwickelns, Testens und Simulierens eines realen, technischen Systems oder von Teilen eines solchen Systems innerhalb einer Entwicklungs- und Simulationsumgebung, zum Beispiel in Form einer Steuergeräte-Modellierung oder Steuergerätearchitektur-Modellierung, einer virtuellen Steuergeräte-Validierung, HIL-Simulation ("Hardware-in-the-loop") oder des "Rapid Control Prototyping" (RCP). Das Softwaremodell repräsentiert hierbei einen lediglich virtuell vorliegenden Prototypen des betreffenden realen technischen Systems und bildet dessen technische Eigenschaften, Parameter, Zustände und Funktionen sowie dessen Schnittstellen und Interaktions- und Kommunikationsmöglichkeiten mit anderen Softwaremodellen oder mit realen, technischen (Teil-) Systemen innerhalb der Entwicklungsumgebung teilweise oder vollständig ab. Prinzipiell können beliebige technische Systeme Gegenstand eines solchen Softwaremodells sein, wobei der Entwicklungsprozess zumindest teilweise auch die computergestützte Simulation, das Erstellen und Testen von virtuellen und/oder softwarebasierten Prototypen oder andere virtualisierte Entwicklungsschritte umfassen kann. Innerhalb dieses technischen Kontexts betrifft die vorliegende Erfindung insbesondere virtuelle Softwaremodelle von Steuergeräten, sogenannte "Virtual Electronic Control Units" (V-ECU), die andere technische Geräte oder Systeme steuern oder regeln, zum Beispiel Fahrzeugmotoren oder dergleichen.

Die Entwicklungsumgebungen eines HIL-Simulators und eines RCP-Testgeräts umfassen jeweils eine Testvorrichtung, auf der das Softwaremodell eines virtuellen Steuergeräts in einer durch die Testvorrichtung vorgegebenen Weise implementiert ist. Das Softwaremodell umfasst hierbei geeignete Eingabe/Ausgabe-Schnittstellen, um das modellierte Steuergerät mit einem zu steuernden Gerät zu verbinden und dessen Steuerfunktionalitäten zu testen. Beim Rapid Control Prototyping (RCP) wird ein Softwaremodell des zu testenden Steuergeräts entwickelt und getestet, das mit dem zu steuernden technischen Gerät verbunden ist. Bei einer HIL-Simulation liegt demgegenüber ein Softwaremodell des zu steuernden technischen Geräts vor, das mit dem zu testenden, realen Steuergerät verbunden ist. In beiden Fällen wird eine für das Testen des Steuergeräts eingerichtete Testvorrichtung bereitgestellt, wobei das Steuergerät einmal als Modell getestet wird (RCP) und einmal als extern anschließbarer Hardware-Prototyp (HIL). Daneben betrifft die Erfindung aber auch Softwaremodelle, die sowohl das virtuelle Steuergerät als auch das zu steuernde Gerät zumindest teilweise umfassen, zum Beispiel wenn weder das Steuergerät noch das zu steuernde Gerät vollständig als Hardware-Prototyp vorliegen.

Derartige Softwaremodelle umfassen eine Vielzahl von softwaremäßig bereitgestellten Funktionen, Objekten, Modulen und/oder Komponenten, die abhängig von der gewählten Entwicklungsumgebung bestimmte Datenstrukturen nutzen und auf komplexe Weise miteinander interagieren und sich in ihrem Verhalten gegenseitig beeinflussen. Solche Softwaremodelle werden häufig von verschiedenen Entwicklern oder Entwicklerteams an verschiedenen Standorten bearbeitet, während eine zentrale Instanz, zum Beispiel ein Entwicklungskoordinator, Projektleiter oder dergleichen, den verteilten Entwicklungsprozess koordiniert, den Entwicklern oder Entwicklerteams Entwicklungsaufgaben zuteilt und unter Verwendung einer geeigneten elektronischen Kommunikationsinfrastruktur als Sender von aufgabenbezogenen Datensätzen gegenüber den Entwicklern fungiert.

In diesem Zusammenhang ist es bekannt, dass bei der asymmetrischen Kryptographie ein Sender eines Datensatzes diesen mit einem öffentlichen Verschlüsselungsschlüssel des gewünschten Empfängers verschlüsselt und der Empfänger den verschlüsselten Datensatz mit seinem korrespondierenden geheimen Entschlüsselungsschlüssel entschlüsseln kann. Allerdings stellt sich bei Verwendung der asymmetrischen Kryptographie in einem verteilten Entwicklungsprozess das Problem, dass keinerlei Möglichkeit besteht, einzelne Softwarekomponenten oder Komponentengruppen innerhalb des vollständigen Softwaremodells individuell oder unterschiedlich im Vergleich zu anderen Komponenten oder Komponentengruppen des gleichen Softwaremodells zu verschlüsseln. Vielmehr bietet die bekannte asymmetrische Verschlüsselung nur die Möglichkeit, aus dem Softwaremodell vorab die betreffenden Komponenten oder Komponentengruppen manuell herauszulösen, das Softwaremodell also gleichsam zu zerlegen, und die herausgelösten Komponenten oder Komponentengruppen mit den öffentlichen Schlüsseln der einzelnen Entwickler separat zu verschlüsseln. Die zentrale Instanz muss hierbei die öffentlichen Schlüssel aller Entwickler und Entwicklerteams besitzen und verwalten.

Ganz abgesehen von dem enormen Administrationsaufwand der asymmetrischen Kryptographie ist es aus technischen Gründen nur schwer möglich, aus dem Softwaremodell bestimmte Softwarekomponenten oder Komponentengruppen zu isolieren und nur diese den betreffenden Entwicklern zur Verfügung zu stellen. Demgegenüber ist es wünschenswert, jedem Entwickler das vollständige Softwaremodell zur Verfügung zu stellen und die unterschiedlichen Zuständigkeiten und Berechtigungen mittels eines besonderen Zugriffsregimes festzulegen.

Insofern ist es die Aufgabe der vorliegenden Erfindung, einen geschützten, verteilten Entwicklungsprozess vorzuschlagen, bei dem jedem Entwickler jeweils das vollständige Softwaremodell vorliegt, er aber nur Zugriff auf diejenigen Softwarekomponenten hat, für deren Bearbeitung er berechtigt ist.

Diese Aufgabe wird durch Verschlüsselungs- und Entschlüsselungsverfahren sowie einen elektronischen Datensatz und Vorrichtungen gemäß den Merkmalen der unabhängigen Ansprüche gelöst. In den davon abhängigen Ansprüchen sind vorteilhafte Ausgestaltungen und Weiterbildungen der Erfindung angegeben.

Gemäß dem erfindungsgemäßen Verschlüsselungsverfahren erzeugt eine zentrale Instanz, also etwa der Entwicklungskoordinator oder Projektleiter in einem verteilten Entwicklungsprozess, zunächst einen kryptographischen Masterschlüssel und einen zentralen, öffentlichen Verschlüsselungsschlüssel, wobei das Softwaremodell mit letzterem vollständig verschlüsselt werden kann. Ferner gruppiert die zentrale Instanz die einzelnen Komponenten des Softwaremodells zu Komponentengruppen, für deren Bearbeitung jeweils unterschiedliche Entwickler oder Entwicklerteams ausschließlich zuständig bzw. berechtigt sein sollen.

Der Einfachheit halber bezeichnet der Begriff des Entwicklers im Folgenden auch Teams aus mehreren Entwicklern, sofern diese einen Entwicklungsauftrag gemeinsam wahrnehmen. Unter dem Begriff der Komponentengruppe ist eine Teilmenge der Komponenten des Softwaremodells zu verstehen, die eine oder mehrere Komponenten umfassen kann. Insbesondere kann eine Komponente auch in mehreren Komponentengruppen enthalten sein, die Komponentengruppen sind also nicht disjunkt.

Ausgehend von einer solchen Gruppierung der Softwarekomponenten in eine oder mehrere Komponentengruppen erzeugt die zentrale Instanz eine Entschlüsselungsstruktur, welche die Gruppierung in Form einer geeigneten Datenstruktur bereitstellt. Die Entschlüsselungsstruktur umfasst Definitionen der einen oder der mehreren Komponentengruppen und regelt einerseits das Verschlüsseln des Softwaremodells durch die zentrale Instanz und andererseits das spätere Entschlüsseln des verschlüsselten Softwaremodells durch die jeweils berechtigten Entwickler. Neben diesen Definitionen von Komponentengruppen umfasst die Entschlüsselungsstruktur ferner eine geeignete Adressierung der einzelnen Komponenten des Softwaremodells, vorzugsweise mittels einer Zuweisung von Attributen an die Komponenten, auf deren Basis Komponenten gruppenweise adressiert und Komponentengruppen definiert werden können. Die Entschlüsselungsstruktur entspricht also einem Regelwerk zur Verschlüsselung der Komponentengruppen innerhalb des vollständigen Softwaremodells gemäß einer vorgegebenen Syntax und Semantik und stellt auf diese Weise ein differenziertes Zugriffsregime bereit, welches den Entwicklern Zugriffsrechte auf Softwarekomponenten einzeln oder gruppiert zuweist.

In einem nächsten Schritt wird das vollständige Softwaremodell mittels des zentralen öffentlichen Schlüssels nach Maßgabe der Entschlüsselungsstruktur verschlüsselt. Ferner wird die Entschlüsselungsstruktur zumindest teilweise in das verschlüsselte Softwaremodell integriert, so dass das Zugriffsregime, welches die Entschlüsselungsstruktur mittels Definitionen von Komponentengruppen vorgibt, beim Entschlüsseln berücksichtigt werden kann. Die zumindest teilweise Integration der Entschlüsselungsstruktur in das Softwaremodell kann hierbei die den Komponenten zugewiesenen Attribute und/oder die Definitionen der Komponentengruppen basierend auf diesen Attributen betreffen. Bevorzugt werden die Zuweisungen von Attributen an Komponenten in das Softwaremodell integriert, während die darauf aufbauenden Definitionen von Komponentengruppen, also die Angaben über die gemeinsam zu entschlüsselnden Komponenten, in den geheimen Schlüssel integriert werden.

Vorzugsweise werden die Komponenten einzeln verschlüsselt, es müssen aber nicht alle Komponenten verschlüsselt werden. Vielmehr kann es zweckmäßig sein, einzelne Komponenten unverschlüsselt zu lassen, wenn diese nicht geschützt werden brauchen. Das Softwaremodell kann insofern auch nur teilweise verschlüsselt werden, so dass das verschlüsselte Softwaremodell einerseits verschlüsselte Komponenten und andererseits unverschlüsselte Komponenten umfassen kann. Die unverschlüsselten Komponenten müssen von der Entschlüsselungsstruktur nicht berücksichtigt werden.

Durch die zumindest teilweise Integration der Entschlüsselungsstruktur in das verschlüsselte Softwaremodell erfolgt dessen Verschlüsselung derart, dass eine in der Entschlüsselungsstruktur definierte Komponentengruppe nur von demjenigen Entwickler entschlüsselt werden kann, in dessen geheimem Entschlüsselungsschlüssel die Definition genau dieser Komponentengruppe integriert ist. Andere Komponentengruppen, deren Definition dieser geheime Schlüssel nicht umfasst, können von dem Entwickler nicht entschlüsselt werden.

Auf diese Weise erlaubt die Erfindung einerseits die vollständige Verschlüsselung des gesamten Softwaremodells in einem einzigen Schritt und andererseits die selektive Entschlüsselung einzelner Komponentengruppen nach Maßgabe eines vorher festgelegten und flexiblen Zugriffsregimes. Weder ist die manuelle Zerlegung des Softwaremodells entsprechend den jeweiligen Zugriffsrechten der Entwickler mit dem Ziel der separaten, entwicklerabhängigen Verschlüsselung einzelner Komponentengruppen notwendig, noch ist eine aufwändige Verwaltung und selektive Benutzung von individuellen öffentlichen Schlüsseln der Entwickler erforderlich. Vielmehr wird zum Verschlüsseln nur ein einziger öffentlicher Schlüssel benötigt, was den Verwaltungsaufwand auf Seiten der zentralen Instanz minimiert. Das Zugriffsregime wird als Entschlüsselungsstruktur direkt in das verschlüsselte Softwaremodell integriert und es kann ein zentraler Verschlüsselungsschlüssel verwendet werden. Die Verschlüsselung ist deshalb unabhängig von individuellen kryptographischen Verschlüsselungsschlüsseln der Entwickler.

Um die Entschlüsselung des verschlüsselten Softwaremodells gemäß dem Zugriffsregime der Entschlüsselungsstruktur sicherzustellen, erzeugt die zentrale Instanz mittels des Masterschlüssels und der Entschlüsselungsstruktur für jeden Entwickler einen individuellen, geheimen Entschlüsselungsschlüssel, mit dem ausschließlich diejenigen Komponentengruppen entschlüsselt werden können, die dem Entwickler durch die Entschlüsselungsstruktur zugewiesen werden. Deshalb werden bei der Erzeugung der geheimen Schlüssel gemäß einer bevorzugten Ausführungsform jeweils die von der Entschlüsselungsstruktur vorgegebenen Definitionen derjenigen Komponentengruppen in den betreffenden geheimen Schlüssel integriert, für deren Entschlüsselung der jeweilige Entwickler berechtigt ist. Gemäß einer alternativen Ausführungsform können die Definitionen der von einem Entwickler zu entschlüsselnden Komponentengruppen auch in das verschlüsselte Softwaremodell integriert werden.

In den bevorzugten Fall, dass die Definitionen der von einem Entwickler zu entschlüsselnden Komponentengruppen in dessen geheimen Schlüssel integriert sind, wird gemäß dem erfindungsgemäßen Entschlüsselungsverfahren für jede verschlüsselte Komponente geprüft, ob der verwendete geheime Schlüssel eine Definition einer zu entschlüsselnden Komponentengruppe umfasst, die die betreffende Komponente einschließt. Nur dann gilt der Entwickler als berechtigt und nur dann wird diese Komponentengruppe entschlüsselt.

Die Erfindung erlaubt die zentrale Erstellung und Verwaltung eines Zugriffsregimes in Form der Entschlüsselungsstruktur durch die zentrale Instanz und stellt sicher, dass das Zugriffsregime beim Entschlüsseln des Softwaremodells berücksichtigt wird. Jeder Entwickler kann also nur diejenigen Komponenten des ihm vorliegenden, vollständig oder teilweise verschlüsselten Softwaremodells entschlüsseln, die einer Komponentengruppe angehören, für deren Bearbeitung er gemäß der Entschlüsselungsstruktur zuständig ist. Der geheime Schlüssel korrespondiert nicht mit einem bestimmten öffentlichen Schlüssel, sondern mit den durch die Entschlüsselungsstruktur vorgegebenen Berechtigungen. Ferner ermöglicht die Erfindung, dass das Softwaremodell nur einmal zentral verschlüsselt werden muss und dann ohne Sicherheitseinschränkungen an mehrere Entwickler übergeben werden kann. Dabei können Teile des Softwaremodells, also Komponenten und Komponentengruppen, ohne individuelle Manipulation mit unterschiedlichen Berechtigungen versehen werden. Genau wie die zentrale Instanz benötigen auch die Entwickler nur einen Schlüssel, um das erfindungsgemäße Verfahren zu nutzen.

Das Resultat des erfindungsgemäßen Verschlüsselungsverfahrens beziehungsweise der Anwendungsgegenstand des erfindungsgemäßen Entschlüsselungsverfahrens ist ein Chiffrat in Form eines elektronischen Datensatzes, welches das verschlüsselte Softwaremodell sowie zumindest teilweise die Entschlüsselungsstruktur umfasst. Obwohl der elektronische Datensatz das vollständige, verschlüsselte Softwaremodel umfasst, sind die Softwarekomponenten bzw. die durch die Entschlüsselungsstruktur definierten Komponentengruppen darin vorzugsweise einzeln und unabhängig von anderen Komponenten oder Komponentengruppen verschlüsselt. Eine verschlüsselte Komponentengruppe umfasst vorzugsweise Komponenten, die wiederum unabhängig von anderen Komponenten einzeln verschlüsselt sind. Die verschlüsselten Komponentengruppen sind durch Anwendung eines geheimen Schlüssels entschlüsselbar, welcher Definitionen umfasst, die mit entsprechenden Definitionen der Entschlüsselungsstruktur in dem elektronischen Datensatz korrespondieren.

Im Zusammenhang mit der vorliegenden Erfindung ist unter dem Begriff "Komponentengruppe" eine Teilmenge derjenigen Komponenten des Softwaremodells zu verstehen, die untereinander bestimmte funktionale, organisatorische oder anderweitige technische Abhängigkeiten aufweisen und die deshalb von einem Entwickler immer gemeinsam entschlüsselt werden sollen, um deren sinnvolle Bearbeitung zu ermöglichen. Die entsprechenden Definitionen solcher Komponentengruppen können entweder in die Entschlüsselungsstruktur oder in den geheimen Schlüssel des betreffenden Entwicklers integriert sein, oder auch sowohl in die Entschlüsselungsstruktur als auch in den geheimen Schlüssel.

Entsprechend erfolgt die Definition der Komponentengruppen in zwei Schritten, nämlich vorzugsweise derart, dass die zentrale Instanz zunächst aufgrund der genannten Abhängigkeiten die Komponentengruppen festgelegt, und den einzelnen Komponenten anschließend Attribute derart zuweist, dass die Komponenten jeder festgelegten Komponentengruppe gruppenweise adressiert bzw. gemeinsam beschrieben werden können. Im einfachsten Fall kann dies dadurch erreicht werden, dass die Komponenten einer Komponentengruppe ein oder mehrere der Attribute übereinstimmend tragen, die die Komponenten anderer Komponentengruppen nicht aufweisen. Bevorzugt werden die Attribute aber auf eine Weise zugewiesen, dass die Komponenten einer Komponentengruppe derart durch Boolsche Operatoren zu aussagenlogischen Ausdrücken verknüpft werden, dass ausschließlich die gewünschten Komponenten die aussagenlogischen Ausdrücke erfüllen.

Prinzipiell ist es aber auch möglich, die Definition der Komponentengruppen in umgekehrter Schrittfolge vorzunehmen, nämlich dadurch, dass die zentrale Instanz den Komponenten zunächst vorgegebene Attribute zuweist und danach in der Entschlüsselungsstruktur Komponentengruppen anhand der Attribute der gewünschten Komponenten definiert. Auch bei dieser Variante können die Komponentengruppen mittels aussagenlogischen Ausdrücken definiert werden, die von den Attributen der gewünschten Komponenten erfüllt werden.

Die Attribute können Eigenschaften der Entwickler oder der Softwarekomponenten betreffen, oder rein abstrakte Merkmale sein, die lediglich der Unterscheidung von Komponenten dienen. Vorzugsweise zeigen die Attribute zum Beispiel Aufgaben, Zuständigkeiten oder die Rolle des Entwicklers in dem Entwicklungsprozess an, oder Funktionen, Sicherheitsstufen oder Urheberschaft von Komponenten, oder adressieren lediglich und ohne weitere Bedeutung einzelne oder mehrere Komponenten. Zum Beispiel kann jeder Komponente auch ein eigenes individuelles Attribut zugewiesen werden.

Auf diese Weise wird jeder Komponente zumindest ein Attribut, vorzugsweise jedoch mehrere Attribute zugewiesen. Ausgehend von den attributierten Komponenten wird die Entschlüsselungsstruktur aufgebaut, vorzugsweise als Liste, deren Listeneinträge jeweils eine Komponentengruppe definieren, indem sie bestimmte Attribute aufgreifen. Eine solcherart definierte Komponentengruppe kann beispielsweise alle Komponenten umfassen, die mindestens eines der in dem zugehörigen Eintrag zusammengefassten Attribute tragen. Zum Beispiel definiert der Listeneintrag [ABC] gemäß einer ODER-Regel die Gruppe aller Komponenten, die entweder das Attribut A oder das Attribut B oder das Attribut C tragen. Alternativ kann eine Komponentengruppe auch durch eine UND-Regel definiert werden, so dass sie diejenigen Komponenten des Softwaremodells umfasst, die alle Attribute des betreffenden Listeneintrags aufweisen. Der Listeneintrag [ABC] definiert dann also die Gruppe aller Komponenten, die die Attribute A und B und C tragen. Prinzipiell können zur Definition von Komponentengruppen beliebige aussagenlogische Ausdrücke gebildet werden, die auch weitere Boolsche Operatoren verwenden, zum Beispiel NOT, XOR, NOR, NAND oder dergleichen.

Entsprechend integriert die zentrale Instanz in einen geheimen Schlüssel ausgehend von der Entschlüsselungsstruktur vorzugsweise zumindest einen Listeneintrag, der diejenige Komponentengruppe definiert, die mit dem geheimen Schlüssel entschlüsselbar sein soll. In den geheimen Schlüssel werden also die Attribute integriert, die die betreffende Komponentengruppe innerhalb der Entschlüsselungsstruktur definieren.

Wenn mehrere Komponentengruppen mit einem geheimen Schlüssel entschlüsselt werden sollen, kann der betreffende Listeneintrag entsprechend syntaktisch gestaltet sein. Gemäß der ODER-Regel definiert der Listeneintrag [AB, CD] dann zwei Komponentengruppen, nämlich einerseits die Gruppe derjenigen Komponenten, die entweder das Attribut A oder das Attribut B tragen, und andererseits die Gruppe derjenigen Komponenten, die entweder das Attribut C oder das Attribut D tragen. Alternativ können mehrere von einem geheimen Schlüssel zu entschlüsselnde Komponentengruppen auch durch mehrere Listeneinträge definiert werden, die dann gemeinsam in den geheimen Schlüssel integriert werden. Die Listeneiträge können beliebige aussagenlogische Ausdrücke sein, die die Attribute mit Bool'schen Operatoren verknüpfen, sofern dies für die Definition einer Komponentengruppe zweckmäßig ist.

Allgemein erfordert die erfindungsgemäße Ver- und Entschlüsselung von Softwaremodellen also einerseits eine Attributbelegung, also eine Zuordnung von Attributen zu den einzelnen Komponenten, und andererseits die Definition der Komponentengruppen als gemeinsam entschlüsselbare Komponenten. Letzteres wird durch Angabe von einzelnen Attributen, Attributkombinationen oder geeignet verknüpften Attributen erreicht, zum Beispiel in Form von aussagenlogischen Ausdrücken mittels Bool'scher Operatoren. Sowohl die Attributbelegung als auch die Definition von Komponentengruppen werden in der Entschlüsselungsstruktur niedergelegt, die die zentrale Datenstruktur der Erfindung darstellt.

Hierbei gibt es zwei prinzipielle Varianten der Integration dieser beiden Strukturen in das verschlüsselte Softwaremodell und den geheimen Schlüssel. Bei der bevorzugten und hier hauptsächlich beschriebenen Ausführungsform wird die Attributierung in das Softwaremodell integriert und die Definitionen der Komponentengruppen anhand der Attribute in den geheimen Schlüssel. Diese Variante wird auch als Key-Policy (KP) bezeichnet. Bei der als Ciphertext-Policy (CP) bezeichneten Variante ist es umgekehrt, es wird nämlich die Attributierung in den geheimen Schlüssel integriert und die Definitionen der Komponentengruppen, jeweils zugeordnet zu den geheimen Schlüsseln, mit denen die entsprechenden Komponentengruppen entschlüsselbar sein sollen, in das verschlüsselte Softwaremodell. Sowohl die KP-Variante als auch die CP-Variante sind von der vorliegenden Erfindung umfasst und können mit ihr und durch sie umgesetzt werden.

Beim Entschlüsseln eines verschlüsselten Softwaremodells wird entsprechend zweierlei geprüft. Einerseits wird geprüft, ob die in den geheimen Schlüssel integrierten Attribute einem Listeneintrag der in das verschlüsselte Softwaremodell teilweise integrierten Entschlüsselungsstruktur entsprechen. Falls dies der Fall ist, ist sichergestellt, dass der geheime Schlüssel berechtigt ist, eine von der Entschlüsselungsstruktur definierte Komponentengruppe zu entschlüsseln. In einem weiteren Schritt wird dann für jede verschlüsselte Komponente des verschlüsselten Softwaremodells anhand deren Attribute geprüft, ob diese Komponente Teil der Komponentengruppe ist, die durch den geheimen Schlüssel entschlüsselbar ist. Falls dies der Fall ist, wird die Komponente entschlüsselt.

Es ist somit ein wesentlicher Vorteil der Erfindung, dass das Softwaremodell vollständig oder teilweise verschlüsselt wird, aber abhängig von der Berechtigung des betreffenden Schlüssels komponentenweise entschlüsselt werden kann. Dadurch wird einerseits unnötiger Verwaltungsaufwand vermieden und andererseits wird wirksam verhindert, dass nichtberechtigte Entwickler auf Softwarekomponenten zugreifen können.

Die Softwarekomponenten können innerhalb des Softwaremodels bestimmte funktionale, organisatorische oder anderweitige Relationen zu anderen Komponenten aufweisen. Vorzugsweise bilden die Attribute solche Relationen teilweise oder vollständig ab. Falls die Relationen der Komponenten zum Beispiel einen Graph mit den Komponenten als Knoten des Graphs bilden, etwa einen gerichteten Graph, wie zum Beispiel eine hierarchische Struktur oder Baumstruktur, können die Attribute diese Graphstruktur abbilden, indem in einer bestimmten Relation stehenden Komponenten jeweils das gleiche Attribut zugewiesen wird.

Typische Relationen zwischen Softwarekomponenten ergeben sich vielfach bereits aus einer von der Entwicklungsumgebung vorgegebenen Datenstruktur, in der das Softwaremodell bzw. das virtuelle technische System entwickelt wird. Als Entwicklungsumgebungen für die eingangs erwähnten Steuergeräte und für die von diesen gesteuerten oder geregelten Systeme kommen bevorzugt AUTOSAR-konforme Architekturmodellierungswerkzeuge oder eine modellbasierte Entwicklungsumgebung in Frage, z.B. eine SIMULINK/MATLAB-Umgebung zur Entwicklung von Steuer- und Regel-Algorithmen des Steuergeräts. Die Erfindung ist aber auch auf non-AUTOSAR-Architekturen anwendbar. In derartigen Entwicklungsumgebungen zur Modellierung und Simulation von technischen Systemen werden die Softwarekomponenten des Modells durch Knoten eines Netzwerks oder Graphen repräsentiert, während die Relationen, technischen Abhängigkeiten oder Signalverläufe zwischen diesen Komponenten durch gerichtete Verbindungen zwischen den Knoten modelliert werden.

Eine solche Relation kann zum Beispiel softwaretechnische Abhängigkeiten betreffen, wenn beispielsweise eine Komponente Funktionen oder Bibliotheken einer oder mehrerer übergeordneter Komponenten nutzt, oder auch technische Abhängigkeiten, wenn beispielsweise gerichtete Signalverläufe zwischen den Komponenten bestehen, die als Eingangsparameter benötigt werden. Solchen voneinander abhängigen Komponenten wird dann vorzugsweise das gleiche Attribut zugewiesen. Andererseits ist es bei einer hierarchischen Baumstruktur beispielweise möglich, alle Blätter des Baums mit verschiedenen Attributen zu belegen und jeder übergeordneten Komponente sämtliche Attribute all derjenigen Blätter zuweisen, die der durch die übergeordnete Komponente definierte Teilbaum besitzt. Vorzugsweise wird bei einer hierarchischen Komponentenstruktur jeder Komponente und der ihr übergeordneten Komponente zumindest ein gemeinsames Attribut zugewiesen. Dadurch wird als weiterer Vorteil der Erfindung eine notwendige Voraussetzung für die Benutzbarkeit des entschlüsselten Softwaremodells durch die berechtigten Entwickler gewährleistet, nämlich dass funktionale, organisatorische, softwaretechnische oder anderweitige Abhängigkeiten und Beziehungen zwischen den Komponenten bei der Bildung von Komponentengruppen mittels geeigneter Einträge in der Entschlüsselungsstruktur berücksichtigt werden.

Diese Art der Attributierung von Softwarekomponenten vereinfacht oder ermöglicht sogar erst die Bildung von sinnvollen Komponentengruppen. Vorzugsweise wird die Entschlüsselungsstruktur derart aufgebaut, dass eine Komponentengruppe für jede von ihr umfasste Softwarekomponente auch die hierarchisch übergeordneten Softwarekomponenten umfasst. Auf diese Weise werden technisch oder organisatorisch sinnvolle und die Relationen zwischen den Komponenten berücksichtigende Komponentengruppen gebildet. Falls erforderlich kann die Entschlüsselungsstruktur auch derart aufgebaut werden, dass eine Komponentengruppe für jede von ihr umfasste Softwarekomponente auch die hierarchisch untergeordneten Softwarekomponenten umfasst, also den durch diese Komponente definierten Teilbaum.

Innerhalb des Softwaremodells kann es Komponenten geben, die zusammen einen autonomen oder ausführbaren beziehungsweise separat funktionierenden oder technisch sinnvollen Teil des Softwaremodells bilden. Ein solcher autonomer oder ausführbarer Teil des Softwaremodells repräsentiert zum Beispiel ein Teilmodell, das bestimmte Funktionen des modellierten technischen Systems weitgehend ohne Interaktion mit anderen Teilen des Modells realisiert, das innerhalb der computergestützten Entwicklungsumgebung autonom lauffähig ist oder das eine technisch sinnvolle Untereinheit des technischen Systems modelliert, zum Beispiel ein austauschbares Modul, ein Standardelement oder dergleichen. Deshalb wird die Entschlüsselungsstruktur bzw. werden deren Listeneinträge vorzugsweise derart aufgebaut, dass die Komponenten eines solchen autonom ausführbaren Teilmodels in einer Komponentengruppe zusammengefasst werden.

Ebenso kann es innerhalb des Softwaremodells auch triviale und/oder essentielle Softwarekomponenten geben. Triviale Komponenten sind beispielsweise solche Komponenten, die in dem modellierten System keine technische Entsprechung haben, sondern lediglich aus strukturellen Gründen vorhanden sind, zum Beispiel um die nicht-trivialen Komponenten in eine zweckmäßig geordnete Baumstruktur zu bringen oder technisch zusammenhängende Komponenten zusammenzufassen. Demgegenüber modellieren essentielle Komponenten derart wesentliche Funktionen oder Aspekte des modellierten Systems, dass sie für die Bearbeitung mehrerer Teilmodells bzw. mehrerer Komponentengruppe benötigt werden. Vorzugsweise berücksichtigen die Attribute des Softwaremodells bzw. die darauf aufbauenden Definitionen der Komponentengruppen triviale und/oder essentielle Komponenten derart, dass sie in jeder Komponentengruppe enthalten sind bzw. zumindest in jeder Komponentengruppe, die in der Baumstruktur unterhalb der betreffenden trivialen und/oder essentiellen Komponenten angeordnet ist.

Gemäß einer besonders bevorzugten Ausführungsform der Erfindung sind die geheimen Schlüssel der Entwickler erweiterbar. Das bedeutet, dass ein bereits ausgegebener geheimer Schlüssel, der dem betreffenden Entwickler erlaubt, bestimmte Komponentengruppen des verschlüsselten Softwaremodells zu entschlüsseln, mittels einer Schlüsselerweiterung derart modifiziert werden kann, dass mit dem erweiterten geheimen Schlüssel weitere Komponentengruppen entschlüsselbar sind.

In dem beschriebenen verteilten Entwicklungsprozess ist dies zum Beispiel immer dann sinnvoll, wenn die zentrale Instanz dem Entwickler weitere Zuständigkeiten einräumen will oder wenn die Zuständigkeit für eine bestimmte Komponentengruppe von einem Entwickler auf einen anderen übertragen werden soll. Beispielsweise kann es notwendig sein, dass ein Entwickler eine neue Komponentengruppe bearbeitet, oder dass sich erst nach der Erzeugung eines geheimen Schlüssels herausstellt, dass er für weitere Komponentengruppen zuständig sein soll.

Hierbei wird von der zentralen Instanz basierend auf der bereits vorliegenden Attributierung des Softwaremodells eine weitere Entschlüsselungsstruktur erzeugt, die zumindest eine weitere Komponentengruppe des Softwaremodells definiert. Anschließend erzeugt die zentrale Instanz mittels des Masterschlüssels und der weiteren Entschlüsselungsstruktur eine Schlüsselerweiterung für den geheimen Schlüssel, die basierend auf der vorliegenden Attributierung der Komponenten eine Definition der weiteren Komponentengruppe umfasst, die zukünftig mit dem entsprechend erweiterten geheimen Schlüssel entschlüsselbar sein soll. Bei der Erzeugung der Schlüsselerweiterung verwendet die zentrale Instanz eine Information über den zu erweiternden geheimen Schlüssel, beispielsweise das nachfolgend erläuterte Identifikationsmerkmal, und integriert diese Information vorzugsweise in die Schlüsselerweiterung.

Der Prozess des Erzeugens der weiteren Entschlüsselungsstruktur ist vorzugsweise ähnlich oder sogar gleich dem Prozess des Erzeugens der ursprünglichen Entschlüsselungsstruktur und kann basierend auf diesem erfolgen, zum Beispiel indem die weitere Entschlüsselungsstruktur aus der ursprünglichen Entschlüsselungsstruktur durch Anpassung oder Abwandlung erzeugt wird, vorzugsweise indem die Attributierung der ursprünglichen Entschlüsselungsstruktur übernommen wird und um die Definition der zumindest einen weiteren von Komponentengruppe ergänzt wird. Vorzugsweise wird die weitere Entschlüsselungsstruktur jedoch unabhängig von der ursprünglichen Entschlüsselungsstruktur erzeugt. Ebenso ist der Prozess des Erzeugens der Schlüsselerweiterung aus der weiteren Entschlüsselungsstruktur vorzugsweise ähnlich oder sogar gleich dem Prozess des Erzeugens des geheimen Schlüssels aus der ursprünglichen Entschlüsselungsstruktur.

Die Definition der weiteren Komponentengruppe in der weiteren Entschlüsselungsstruktur sowie der Schlüsselerweiterung geschieht vorzugsweise mittels der vorhandenen Attribute derjenigen Komponenten, die in der weiteren Komponentengruppe zusammengefasst sind. Zur Definition der weiteren Komponentengruppe kann aber auch zumindest ein weiteres Attribut verwendet werden, welches alleine oder in Kombination mit anderen Attributen in den Definitionen des zu erweiternden geheimen Schlüssels bisher nicht verwendet wurde. Das zumindest eine weitere Attribut wird dann in die Schlüsselerweiterung geeignet integriert.

Der erweiterte geheime Schlüssel wird schließlich von demjenigen Entwickler erzeugt, dessen geheimer Schlüssel erweitert werden soll. Dabei wird die Schlüsselerweiterung in den zu erweiternden geheimen Schlüssel integriert bzw. mit diesem geeignet verknüpft oder fusioniert. Die von der Schlüsselerweiterung vorgegebene Definition der zumindest einen weiteren Komponentengruppe, also die Attribute und aussagenlogischen Ausdrücke, die diese weitere Komponentengruppe definieren, wird vorzugsweise in den geheimen Schlüssel integriert, bzw. in die Definitionen des geheimen Schlüssels, so dass mit dem erweiterten geheimen Schlüssel zukünftig auch die weitere Komponentengruppe entschlüsselt werden kann. Die Definitionen des erweiterten geheimen Schlüssels umfassen also die Definitionen und Attribute sowohl des geheimen Schlüssels als auch der Schlüsselerweiterung.

Wenn der zu erweiternde geheime Schlüssel beispielsweise die Definition [AB] umfasst, welche die Gruppe aller Komponenten definiert, die wenigstens eines der Attribute A und B tragen, kann die weitere Entschlüsselungsstruktur und die daraus resultierende Schlüsselerweiterung zum Beispiel die weitere Definition [BC] umfassen, welche die Gruppe aller Komponenten definiert, die wenigstens eines der Attribute B und C tragen. Der um die Schlüsselerweiterung erweiterte geheime Schlüssel erlaubt es dem betreffenden Entwickler dann, zusätzlich zu der Komponentengruppe [AB] auch die Komponentengruppe [BC] zu entschlüsseln. Der entsprechende Listeneintrag [AB, BC] des erweiterten geheimen Schlüssels definiert dann beide Komponentengruppen. Dass beide Komponentengruppen sich hinsichtlich des Attributs B überlappen, ist kein Hindernis, denn die vorliegende Erfindung erfordert nicht, dass die Komponentengruppen überlappungsfrei definiert werden.

Bei der Entschlüsselung des verschlüsselten Softwaremodells mittels des erweiterten geheimen Schlüssels wird ebenso, wie bei der Entschlüsselung mittels des ursprünglichen, noch nicht erweiterten geheimen Schlüssels für jede Komponente des verschlüsselten Softwaremodells zusätzlich geprüft, ob diese Komponente Teil der weiteren Komponentengruppe ist, die nun durch den erweiterten geheimen Schlüssel entschlüsselbar ist. Nur wenn dies der Fall ist, wird auch die weitere Komponentengruppe entschlüsselt.

Hierbei kommt es darauf an, dass die Entschlüsselungsstruktur des verschlüsselten Softwaremodells bereits eine Definition der weiteren Komponentengruppe umfasst, die mit dem erweiterten geheimen Schlüssel zusätzlich entschlüsselt werden soll. Falls die Definition der weiteren Komponenten bereits in der Entschlüsselungsstruktur vorgesehen ist und in dem verschlüsselten Softwaremodell vorliegt, zum Beispiel weil der geheime Schlüssel eines anderen Entwicklers diese Komponentengruppe bereits entschlüsseln konnte, muss das Softwaremodell nicht erneut verschlüsselt werden. Falls die weitere Komponentengruppe jedoch mittels der weiteren Entschlüsselungsstruktur neu definiert wurde, wenn also die Definition der weiteren Komponentengruppe nicht in der ursprünglichen Entschlüsselungsstruktur enthalten war, muss das Softwaremodell entweder mit einer entsprechend erweiterten Entschlüsselungsstruktur neu verschlüsselt werden, damit die weitere Komponentengruppe mit dem erweiterten geheimen Schlüssel entschlüsselt werden kann, oder die Schlüsselerweiterung definiert eine aus der ursprüngliche Entschlüsselungsstruktur nicht ableitbare Komponentengruppe und stellt insofern keine zulässige Erweiterung des geheimen Schlüssels dar. Beide Varianten können technisch sinnvoll und von der zentralen Instanz erwünscht sein. Bei der erstgenannten Variante, also bei der erneuten Verschlüsselung des Softwaremodells mit der erweiterten Entschlüsselungsstruktur wird entweder die weitere Entschlüsselungsstruktur in die ursprünglichen Entschlüsselungsstruktur integriert oder es werden beim Verschlüsseln des Softwaremodells sowohl die ursprüngliche Entschlüsselungsstruktur als auch die weitere Entschlüsselungsstruktur berücksichtigt.

Alternativ kann anstatt einer separaten weiteren Entschlüsselungsstruktur auch eine erweiterte Entschlüsselungsstruktur erzeugt werden, die sowohl die Definitionen der bisher bereits entschlüsselbaren Komponentengruppen als auch die Definition der weiteren Komponentengruppe umfasst. Diese erweiterte Entschlüsselungsstruktur wird dann verwendet, um die Schlüsselerweiterung zu erzeugen und um das Softwaremodell erneut zu verschlüsseln.

Die Schlüsselerweiterung mit der Definition der weiteren Komponentengruppe wird derart erzeugt, dass die weitere Komponentengruppe nur von dem erweiterten geheimen Schlüssel entschlüsselt werden kann, insbesondere also nicht durch die Schlüsselerweiterung alleine. Die Schlüsselerweiterung unterscheidet sich von einem geheimen Schlüssel in Aufbau, Struktur oder durch ein separates Unterscheidungsmerkmal derart, dass sie bei der Entschlüsselung des verschlüsselten Softwaremodells als solche erkannt und von einem geheimen Schlüssel unterschieden werden kann. Vorzugsweise wird diese Unterscheidung über eine besondere Struktur der Schlüsselerweiterung vorgenommen, zum Beispiel indem sich die Syntax der Schlüsselerweiterung von derjenigen eines geheimen Schlüssels unterscheidet. Alternativ kann ein spezifisches Unterscheidungsmerkmal eingesetzt werden, das bei der Schlüsselerweiterung zusätzlich vorhanden ist oder gegenüber dem geheimen Schlüssel fehlt.

Vorzugsweise umfassen der ursprüngliche geheime Schlüssel sowie die Schlüsselerweiterung jeweils ein Identifikationsmerkmal. Das Identifikationsmerkmal, das bei der Erzeugung des geheimen Schlüssels bzw. der Schlüsselerweiterung in diese integriert wird, kann eine Zufallszahl sein oder auch Informationen zu dem betreffenden Entwickler oder dem geheimen Schlüssel tragen, zum Beispiel in Form eines Hashwerts. Das Identifikationsmerkmal kann auch komplexer aufgebaut sein und weitere Informationen codieren, zum Beispiel auch die Definition der weiteren Komponentengruppe.

Um sicherzustellen, dass die weitere Komponentengruppe nur durch den erweiterten geheimen Schlüssel entschlüsselt werden kann, wird geprüft, ob die Identifikationsmerkmale des geheimen Schlüssels und der Schlüsselerweiterung miteinander korrespondieren. Diese Prüfung kann einerseits bei der Erweiterung des geheimen Schlüssels um die Schlüsselerweiterung stattfinden, zum Beispiel dadurch, dass der erweiterte geheime Schlüssel nur gebildet wird, wenn die Identifikationsmerkmale korrespondieren. Wenn die Identifikationsmerkmale nicht korrespondieren, wird der erweiterte geheime Schlüssel bei dieser Variante also erst gar nicht gebildet.

Bevorzugt wird der erweiterte geheime Schlüssel jedoch unabhängig von einer Korrespondenz der Identifikationsmerkmale gebildet, und die Prüfung auf Korrespondenz findet erst bei Verwendung des erweiterten geheimen Schlüssels statt. Bei dieser Variante werden also beide Identifikationsmerkmale ungeprüft in den erweiterten geheimen Schlüssel übernommen und das verschlüsselte Softwaremodell wird nur dann entschlüsselt, wenn die beiden Identifikationsmerkmale korrespondieren. Besonders bevorzugt werden die Identifikationsmerkmale des erweiterten geheimen Schlüssels nur dann auf Korrespondenz geprüft, wenn die weitere Komponentengruppe entschlüsselt werden soll. Diejenigen Komponentengruppen, die bereits durch den ursprünglichen, nicht erweiterten geheimen Schlüssel entschlüsselt werden konnten, werden vorzugsweise auch durch den erweiterten geheimen Schlüssel ohne Einschränkung entschlüsselt, selbst wenn das Identifikationsmerkmal der Schlüsselerweiterung und das Identifikationsmerkmal des geheimen Schlüssels nicht miteinander korrespondieren. Die weitere Komponentengruppe wird bei mangelnder Übereinstimmung der Identifikationsmerkmale jedoch nicht entschlüsselt.

Bei den erfindungsgemäßen Verfahren ist die Ausführungsreihenfolge der beschriebenen Schritte nicht auf die Reihenfolge beschränkt, in der sie beschrieben werden. Vielmehr umfasst die Erfindung alle technisch sinnvollen Ausführungsreihenfolgen und Schrittkombinationen, die den Zweck der Erfindung erfüllen.

Die vorliegende Erfindung umfasst auch eine Verschlüsselungsvorrichtung, vorzugsweise als Softwarelösung ausgeführt, die das erfindungsgemäße Verschlüsselungsverfahren für die zentrale Instanz zur Verfügung stellt, zum Beispiel in Form von Softwaremodulen, Programmen oder dergleichen. Insbesondere umfasst die Verschlüsselungsvorrichtung Programme und entsprechende Bedienschnittstellen zum Erzeugen des Masterschlüssels und des zugehörigen öffentlichen Schlüssels (*setup*), zum Erzeugen der Entschlüsselungsstruktur und der individuellen geheimen Schlüssel (*keygen*), zum Erzeugen der weiteren Entschlüsselungsstruktur und der betreffenden Schlüsselerweiterung (*extkey*), sowie zum Verschlüsseln des Softwaremodells (*enc*). Die Verschlüsselungsvorrichtung kann als separate Software zur Realisierung der erfindungsgemäßen kryptographischen Verfahren ausgestaltet sein, oder in eine Entwicklungsumgebung integriert, innerhalb der das Softwaremodell entwickelt und bearbeitet wird.

Ferner umfasst die vorliegende Erfindung auch eine Entschlüsselungsvorrichtung, vorzugsweise als Softwarelösung ausgeführt, die den Entwicklern das erfindungsgemäße Entschlüsselungsverfahren zur Verfügung stellt, zum Beispiel in Form von Softwaremodulen, Programmen oder dergleichen. Insbesondere umfasst die Entschlüsselungsvorrichtung Programme und entsprechende Bedienschnittstellen zum Entschlüsseln (*dec*) des verschlüsselten Softwaremodells mit dem geheimen oder erweiterten geheimen Schlüssel. Die Entschlüsselungsvorrichtung kann als separate Software zur Realisierung der erfindungsgemäßen kryptographischen Verfahren ausgestaltet sein, oder in die Entwicklungsumgebung integriert sein, innerhalb der das Softwaremodell entwickelt und bearbeitet wird. Die Patentschrift DE102007008948A1 beschreibt ein Verfahren zur Rechteverwaltung digitaler Inhalte zwischen wenigstens einem Rechteinhaber mit einer ersten elektronischen Arbeitsumgebung und wenigstens einem Inhaltenutzer mit einer zweiten elektronischen Arbeitsumgebung, wobei der Rechteinhaber dem Inhaltenutzer die digitalen Inhalte mittels der ersten elektronischen Arbeitsumgebung in einem bestimmten Rechteumfang zur Verfügung stellt und der Inhaltenutzer die zur Verfügung gestellten digitalen Inhalte auf der zweiten elektronischen Arbeitsumgebung nur in dem bestimmten Rechteumfang nutzen kann.Die Erfindung ist durch die beigefügten Ansprüche definiert.

Weitere Merkmale und Vorteile der Erfindung ergeben sich aus der folgenden Beschreibung erfindungsgemäßer Ausführungsbeispiele sowie weiteren Ausführungsalternativen in Zusammenhang mit den folgenden Zeichnungen, die zeigen:
- Figur 1: ein Blockschaltbild erfindungsgemäßer Vorrichtungen;
- Figur 2: schematisch die Schritte der erfindungsgemäßen Verfahren;
- Figur 3: ein Blockdiagramm einer Umgebung zum Testen eines technischen Systems in Form eines Softwaremodells;
- Figur 4: schematisch die Schritte der erfindungsgemäßen Verfahren bei einer beispielhaften Attributbelegung des Softwaremodells;
- Figur 5: eine Darstellung eines beispielhaften Softwaremodells mit Komponentengruppen und Attributen;
- Figur 6: ein beispielhaftes Softwaremodell mit trivialen Softwarekomponenten; und
- Figur 7: schematisch die Schritte der Verfahren zum Erzeugen und Verwenden einer Schlüsselerweiterung.

Die nachfolgend beschriebenen bevorzugten Ausführungsformen der Erfindung ermöglichen die sichere verteilte Entwicklung eines Softwaremodells eines technischen Systems mittels einer besonderen asymmetrischen Ver- und Entschlüsselung der Softwarekomponenten des Softwaremodells. Prinzipiell ist die Erfindung für beliebige komponentenbasierte Softwaremodelle geeignet, unabhängig von den konkret verwendeten Programmiersprachen und Datenstrukturen, der Entwicklungsumgebung oder einer sonstigen Ausgestaltung des Softwaremodells. Ebenso wenig ist die Erfindung beschränkt auf die Modellierung bestimmter technischer Systeme. Vor diesem Hintergrund wird die Erfindung nachfolgend beispielhaft anhand virtueller Steuergeräte beschrieben ("Virtual Electronic Control Unit"; V-ECU), so wie sie zum Beispiel mit der VEOS® oder SCALEXIO®-Umgebung der dSPACE GmbH, Paderborn, Deutschland entwickelt und getestet werden können.

Derartige Softwaremodelle werden innerhalb der eingesetzten Entwicklungsumgebung beispielsweise als SIMULINK- oder AUTOSAR-konforme-Modelle in Form von hierarchisch organisierten, mehrkomponentigen Softwarestrukturen realisiert. Die Erfindung ist auf dieses beispielhafte Szenario jedoch nicht beschränkt, sondern betrifft allgemein auch andere geeignete Entwicklungs- und Simulationsumgebungen sowie Software- und Hardware-Architekturen, insbesondere auch non-AUTOSAR-Architekturen, sowie beliebige, auch nichthierarchische Softwarestrukturen, sofern sie komponentenweise organisiert sind und als Graph darstellbar sind. Die Softwaremodelle werden innerhalb der gewählten Entwicklungsumgebung mittels einer geeigneten Beschreibungssprache beschrieben, die proprietär sein kann oder einem Softwarestandard entspricht, beispielsweise XML-basierte Sprachen oder andere gängige Auszeichnungs- und Markup-Sprachen.

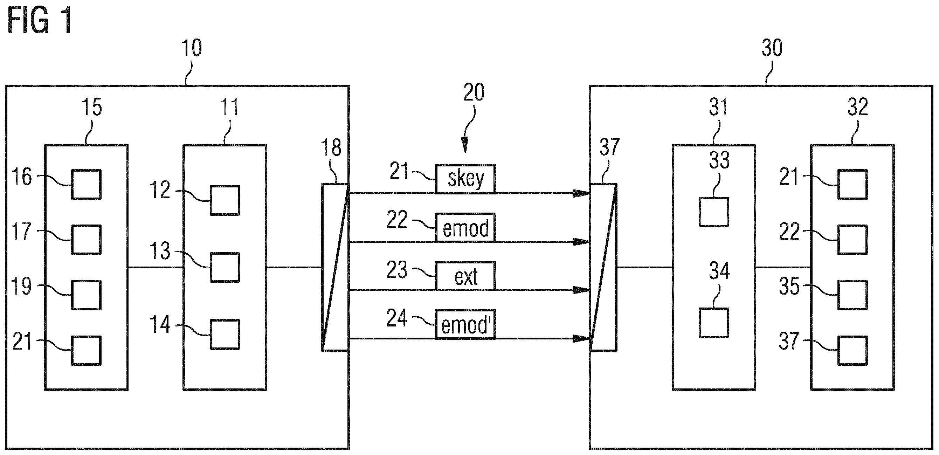

Das schematische Szenario der Figur 1 zeigt eine zentrale Instanz 10 und einen von mehreren möglichen Entwicklerarbeitsplätzen 30, auf denen gemeinsam ein Softwaremodell 16 eines technischen Systems entwickelt wird, beispielsweise eines virtuellen Steuergeräts. In diesem Zusammenhang ist nachfolgend unter dem Begriff der "zentralen Instanz" je nach Kontext entweder die in Figur 1 mit dem Bezugszeichen 10 bezeichnete technische Vorrichtung zu verstehen, oder ein menschlicher Entwicklungskoordinator, der diese Vorrichtung bedient. Der Einfachheit halber wird der Entwicklerarbeitsplatz 30, also die hardware- und softwaremäßige Ausgestaltung eines Arbeitsplatzes eines menschlichen Entwicklers, nachfolgend auch schlicht als "Entwickler" bezeichnet. Kontextabhängig kann der Begriff "Entwickler" aber auch den menschlichen Entwickler bezeichnen, der den Entwicklerarbeitsplatz 30 bedient.

Gemäß Figur 1 übernimmt die zentrale Instanz 10 die Koordination des verteilten Entwicklungsprozesses und gibt Entwicklungsaufträge an die Entwickler 30 heraus, die jeweils exklusiven Zugriff auf bestimmte Teile des Softwaremodells 16 haben sollen, beispielsweise auf die im Zusammenhang mit den weiteren Figuren beschriebenen Komponentengruppen 42. Das Softwaremodell 16 des virtuellen Steuergeräts enthält in der Regel sensible Daten und Informationen, insbesondere Quellcode, Skriptcode, Objektcode oder andere Programmelemente, beispielsweise hinsichtlich der technischen Konfiguration des modellierten technischen Systems oder hinsichtlich von Algorithmen, Funktionen oder Routinen des modellierten Systems. Diese sensiblen Daten werden nur bestimmten Entwicklern 30 preisgegeben und sollen von anderen Entwicklern 30 nicht eigesehen oder manipuliert werden können.

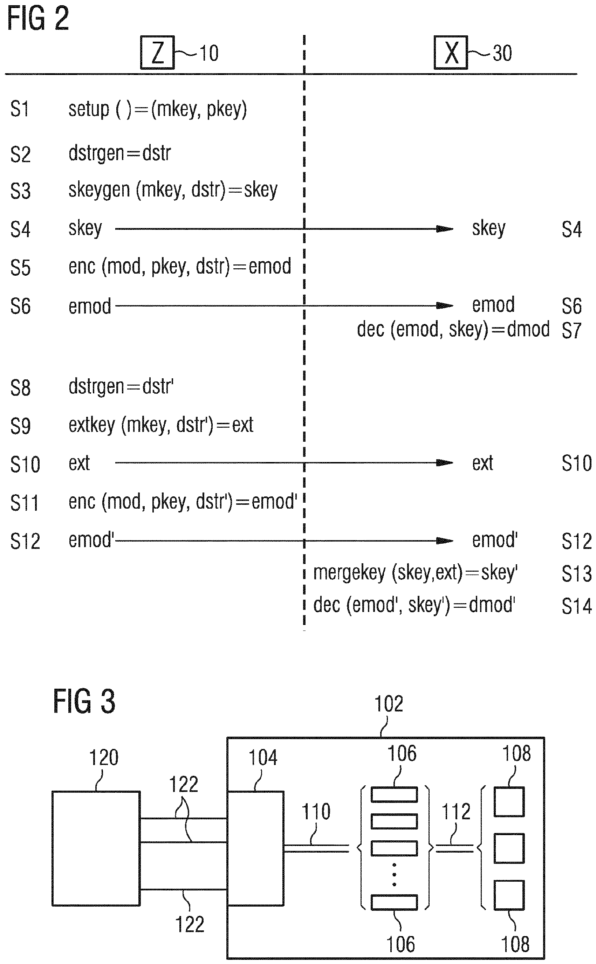

Die Anordnung gemäß Figur 1 und das mit dieser Anordnung realisierte Verfahren gemäß Figur 2 ermöglichen den verteilten Entwicklungsprozess. Hierbei entscheidet die zentrale Instanz 10, welche Zugriffsrechte und Befugnisse einzelne Entwickler 30 haben. Das Softwaremodell 16 wird dazu kryptographisch so abgesichert, dass es einerseits an alle Entwickler 30 gleichermaßen weitergegeben werden kann, dass die Entwickler 30 jedoch nur den von der zentralen Instanz 10 erlaubten Zugriff auf bestimmte Teile des Softwaremodells 16 haben, beispielsweise auf bestimmte Komponentengruppen 42.

Die zentrale Instanz 10 wird bedient von einem menschlichen Entwicklungskoordinator und umfasst diverse hardwaremäßig und softwaremäßig bereitgestellte Einrichtungen und Module. Insbesondere umfasst die zentrale Instanz 10 eine Verschlüsselungseinrichtung 11, die als separater Computer realisiert sein kann oder als integrierter Bestandteil einer Arbeitsumgebung des Entwicklungskoordinators. Die Verschlüsselungseinrichtung 11 umfasst mehrere Softwaremodule, beispielsweise ein SETUP-Modul 12, um das erfindungsgemäße Verfahren zu initialisieren, ein KEYGEN-Modul 13 zum Erzeugen von kryptographischen Schlüsseln, sowie ein ENC-Modul 14 zum kryptographischen Verschlüsseln des Softwaremodells 16. In einem Speicher 15 sind relevante Daten hinterlegt, beispielsweise dass unverschlüsselte Softwaremodell 16 und eine Entschlüsselungsstruktur 17. In dem Speicher 15 können auch weitere Daten hinterlegt werden, die in Zusammenhang mit dem erfindungsgemäßen Verfahren erzeugt oder verwendet werden, beispielsweise ein öffentlicher Schlüssel 19 (*pkey*) oder Daten, die über einen Telekommunikationskanal 20 an die Entwickler 30 geschickt werden, nämlich zum Beispiel geheime Schlüssel 21 (*skey*), verschlüsselte Softwaremodelle 22 (*emod*) und 24 (*emod'*) oder Schlüsselerweiterungen 23 (*ext*).

Zur Kommunikation mit den Entwicklern 30 umfasst die zentrale Instanz 10 eine Kommunikationsschnittstelle 18, die mit einer Kommunikationsschnittstelle 37 des Entwicklerarbeitsplatzes 30 korrespondiert. Die Daten 21, 22, 23, 24 werden über den Telekommunikationskanal 20 abgesichert übertragenen. Für die Softwaremodelle 22, 24 gilt dies auch bei einem nicht separat gesicherten Telekommunikationskanal 20 ohnehin, da sie vor der Übertragung erfindungsgemäß verschlüsselt werden. Auch die Schlüsselerweiterung 23 kann prinzipiell über einen ungesicherten Kanal 20 übertragen werden, denn sie ist für einen Angreifer ohne den zugehörigen geheimen Schlüssel 21 wertlos. Lediglich der geheime Schlüssel 21 muss zwingend über einen gesicherten Kanal 20 übertragen werden, um Spähangriffe zu verhindern und die Integrität des gesamten Verfahrens sicherzustellen.

Die Entwickler 30 stehen mit der zentralen Instanz 10 über die Kommunikationsschnittstelle 37 in Datenkommunikation. Ein Entwicklerarbeitsplatz 30 umfasst insbesondere eine Entschlüsselungsvorrichtung 31, die beispielsweise in Form eines separaten Computers vorliegen kann oder integriert ist in eine Entwicklungsumgebung. Die Verschlüsselungsvorrichtung 31 umfasst hierbei mehrere softwaremäßig realisierte Module, insbesondere ein DEC-Modul 33 zum Entschlüsseln von verschlüsselten Softwaremodellen 22, 24 sowie ein MERGE-Modul 34, dessen Funktion nachfolgend beschrieben wird. Darüber hinaus umfasst ein Entwicklerarbeitsplatz 30 auch einen Speicher 32, in dem relevante Daten hinterlegt sind, beispielsweise das verschlüsselte Softwaremodell 22 (*emod*), das entschlüsselte Softwaremodell 35 (*dmod*) oder die geheimen Schlüssel 21 (*skey*) und 37 (*skey'*)*.* Daneben können in dem Speicher 32 bei Bedarf auch andere Daten abgelegt werden, zum Beispiel das verschlüsselte Softwaremodell 24 (*emod'*), das entschlüsselte Softwaremodell 36 (*dmod'*) oder die Schlüsselerweiterung 23 (*ext*).

Die Module 12, 13, 14 und 33 realisieren vier zentrale Verfahren bzw. Methoden, mit denen eine besondere Ausführungsform der Erfindung realisiert wird, bei der die Zugriffsrechte der Entwickler 30 von der zentralen Instanz 10 initial festgelegt werden. Bei einer bevorzugten Erweiterung dieser grundlegenden Ausführungsform ermöglicht das Modul 34 die Erweiterung der Zugriffsrechte des Entwicklers 30 bzw. seines geheimen Schlüssels 21 auch nachdem der initiale Verschlüsselungsprozess auf Seiten der zentralen Instanz 10 abgeschlossen ist.

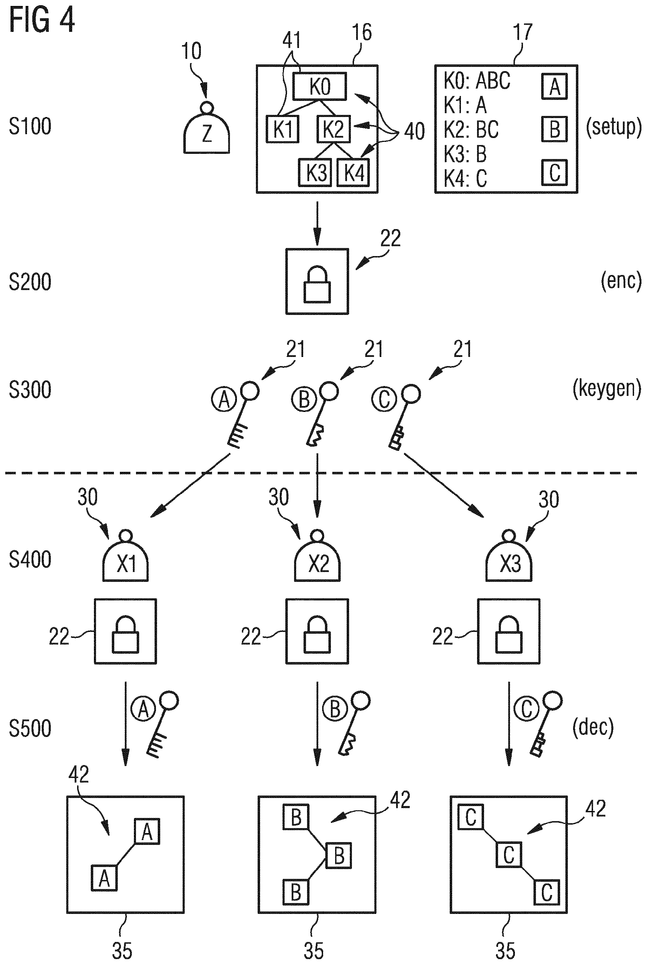

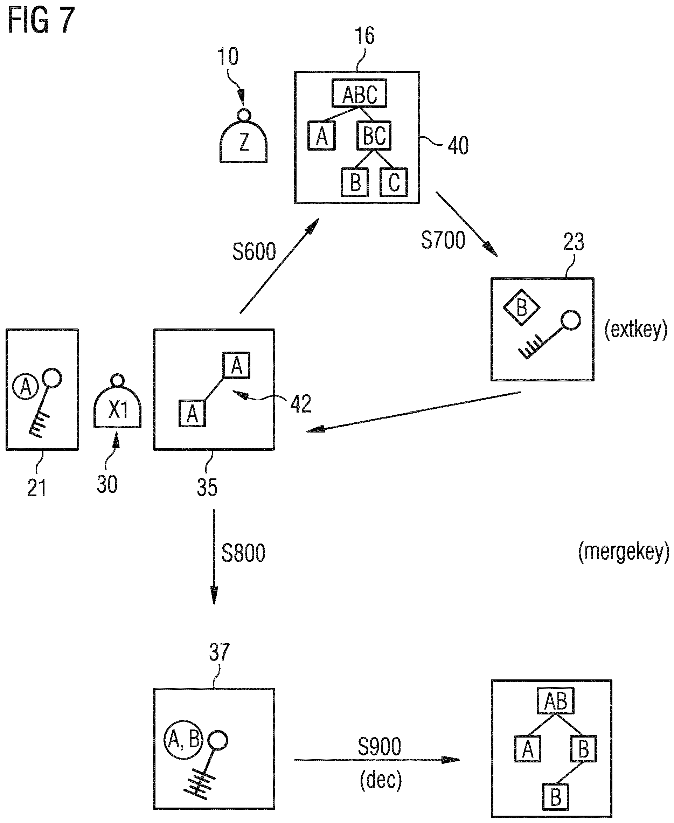

Die Schritte S1 bis S7 der Figur 2 veranschaulichen die grundlegende Ausführungsform des Verschlüsselns und Entschlüsselns eines unverschlüsselten Softwaremodells 16, während die Schritte S8 bis S14 der Figur 2 die besonders bevorzugte Ausführungsform des Erweiterns der zunächst dem Entwickler 30 erteilten Zugriffsrechte betreffen. Korrespondierend betrifft die Figur 4 wiederum die grundlegende Ausführungsform des Verschlüsselns und Entschlüsselns, während die Figur 7 die Erweiterung der Zugriffsrechte betrifft.

Die Schritte S1 bis S6 sowie S8 bis S12 gemäß Figur 2 werden von der zentralen Instanz 10 (Z) ausgeführt, während die Schritte S4, S6, S7, S10 und S12 bis S14 von den Entwicklern 30 (X) ausgeführt werden. Die zentrale Instanz 10 fungiert hierbei als Schlüsselgenerator und ist beispielsweise in der IT- oder Entwicklungsabteilung eines Softwareunternehmens angesiedelt. Diese führt mittels des SETUP-Moduls 12 in Schritt S1 eine Initialisierung des erfindungsgemäßen Verfahrens durch, bei der in einem zusammenhängenden Schritt ein geheimer Masterschlüssel (*mkey*) und ein zentraler öffentlicher Schlüssel 19 (*pkey*) erzeugt werden [*setup()*=*(mkey, pkey)*]. Alternativ können diese beiden grundlegenden Schlüssel des erfindungsgemäßen Verfahrens bei der Initialisierung auch einzeln erzeugt werden, beispielsweise durch separate Routinen [*mkeygen*=*mkey; pkeygen*=*pkey*]. Ebenso ist es möglich, dass bei der Initialisierung nur ein zentraler Verwaltungsschlüssel erzeugt wird, der in sich die Funktionen des Masterschlüssels und des zentralen öffentliche Schlüssel 19 vereint.

Der Masterschlüssel fungiert als zentraler geheimer Schlüssel der zentralen Instanz 10 zum Erzeugen aller weiteren geheimen Schlüssel und relevanten Datenstrukturen. Der öffentliche Schlüssel 19 repräsentiert den zentralen Verschlüsselungsschlüssel der zentralen Instanz 10. Er kann insofern bei der zentralen Instanz 10 verbleiben, kann aber auch an die Entwickler 30 weitergegeben werden, wenn diese im Rahmen der verteilten Softwareentwicklung auch Verschlüsseln können sollen.

Daneben kann der öffentliche Schlüssel 19 auch entsprechend der herkömmlichen asymmetrischen Kryptographie als Entschlüsselungsschlüssel eingesetzt werden, um verschlüsselte Daten zu entschlüsseln, die mit korrespondierenden geheimen Schlüsseln 21 verschlüsselt wurden.

Zum Verschlüsseln des Softwaremodells 16 und Zuweisen der gewünschten Zugriffsrechte an die Entwickler 30 wird in Schritt S2 eine Entschlüsselungsstruktur 17 (*dstr*) erzeugt [*dstrgen*=*dstr*]. Die Entschlüsselungsstruktur 17 wird beispielsweise dann erzeugt, wenn ein Entwickler 30 einen individualisierten, geheimen Schlüssel 21 anfordert oder dem Entwickler 30 ein geheimer Schlüssel 21 bereitgestellt werden soll. Sie kann durch eine beliebige geeignete Datenstruktur realisiert werden, besteht im Zusammenhang mit den beschriebenen beispielhaften Ausführungsformen jedoch einerseits aus einer Attributierung, also einer Zuweisung von Attributen 41 an die einzelnen Komponenten 40 des Softwaremodells 16, und andererseits aus einer Liste, deren Listeneinträge jeweils die Zugriffsrechte auf bestimmte Teile eines verschlüsselten Softwaremodells 22 anhand der zugewiesenen Attribute 41 festlegen. Die Listeneinträge bestehen hierbei aus einzelnen oder mehreren, mittels Boolscher Operatoren verknüpften Attributen 41. In dieser Weise legen die Listeneinträge fest, welche Teile des Softwaremodells 16 der betreffende Entwickler 30 mit seinem individuellen geheimen Schlüssel 21 entschlüsseln kann. Die Entschlüsselungsstruktur 17 berücksichtigt hierbei den komponentenartigen Aufbau des Softwaremodells 16 und erlaubt abhängig von den Attributen 41, die den Komponenten 40 durch die Attributierung zugeordnet werden, den Zugriff auf eine Teilmenge der Komponenten 40 bzw. eine oder mehrere Komponentengruppen 42 des Softwaremodells 16.

Die durch die Entschlüsselungsstruktur 17 bereitgestellten Entschlüsselungs- bzw. Zugriffsrechte werden in Schritt S3 bei der Erzeugung eines individuellen geheimen Schlüssels 21 (*skey*) in diesen integriert [*skeygen(dstr)*=*skey*]. So ist es zum Beispiel zweckmäßig, dass ein Entwickler 30 - beispielsweise ein Mitarbeiter eines Kooperationspartners des Softwareunternehmens, das die zentrale Instanz 10 betreibt - nur auf diejenigen Komponenten 40 bzw. Komponentengruppen 42 des Softwaremodells 16 zugreifen bzw. diese entschlüsseln kann, die seiner Funktion, seiner technischen Abteilung oder seinem Aufgabenfeld entsprechen.

In Schritt S3 wird also für jeden an dem Entwicklungsprozess beteiligten Entwickler 30 ein eigener individueller geheimer Schlüssel 21 erzeugt, der sich von den geheimen Schlüsseln anderer Entwickler unterscheidet. Hierbei wird einerseits der Masterschlüssel (*mkey*) berücksichtigt und andererseits werden aus der Entschlüsselungsstruktur 17 die Zugriffsrechte mit dem geheimen Schlüssel 21 des betreffenden Entwicklers 30 verknüpft bzw. in diesen integriert.

In Schritt S4 wird der erzeugte geheime Schlüssel 21 von der zentralen Instanz 10 an den betreffenden Entwickler 30 über den Kommunikationskanal 20 kryptographisch gesichert übertragen. Der geheime Schlüssel 21 wird hierzu beispielsweise mit einem öffentlichen Schlüssel des Entwicklers 30 verschlüsselt, der nicht identisch ist mit dem erfindungsgemäßen öffentlichen Schlüssel der zentralen Instanz, und von dem Entwickler 30 mit einem korrespondierenden geheimen Schlüssel wieder entschlüsselt, der wiederum nicht identisch mit dem erfindungsgemäßen geheimen Schlüssel 21 ist. Aber auch symmetrische Verfahren sind hier einsetzbar, sofern der Schlüsselaustausch gesichert erfolgt. Alternativ kann der geheime Schlüssel 21 auch auf eine andere sichere Weise an den Entwickler 30 übergeben werden, beispielsweise auf dem Postweg oder persönlich.

In Schritt S5 wird das Softwaremodell 16 mittels des zentralen öffentlichen Schlüssels 19 verschlüsselt [*enc(mod, pkey, dstr)*=*emod*]. Hierbei wird die Attributierung aus der Entschlüsselungsstruktur 17 (*dstr*), also die Zuordnung von Attributen 41 an die Komponenten 40 des zugrundeliegenden Softwaremodells 16, in das erzeugte, verschlüsselte Softwaremodell 22 (*emod*) integriert, damit die in den jeweiligen geheimen Schlüssel 21 integrierten Zugriffsrechte der verschiedenen Entwickler 30 später anhand des verschlüsselten Softwaremodell 22 geprüft werden können (vgl. Schritt S7).

In Schritt S6 wird das verschlüsselte Softwaremodell 22 (*emod*) von der zentralen Instanz 10 an alle Entwickler 30 übertragen und in Schritt S7 wird das verschlüsselte Softwaremodell 22 von einem Entwickler 30 mit Hilfe des DEC-Moduls 33 und des zuvor empfangenen, individuellen geheimen Schlüssels 21 entschlüsselt [*dec(emod, skey)*=*dmod*]. Zusätzlich kann beim Entschlüsselungsschritt S7 auch der öffentliche Schlüssel 21 (*pkey*) verwendet werden, sofern dieser von der zentralen Instanz 10 an die Entwickler 30 übertragen wurde, beispielsweise im Rahmen des Übertragungsschrittes S4.

Das sich in Schritt S7 ergebende entschlüsselte Softwaremodell 35 (*dmod*) ist hierbei nicht identisch mit dem ursprünglichen, unverschlüsselten Softwaremodell 16 (*mod*), da das entschlüsselte Softwaremodell 35 lediglich diejenigen Komponenten 40 bzw. Komponentengruppen 42 des Softwaremodells 16 in entschlüsselter Form aufweist, die mittels des individuellen geheimen Schlüssels 21 entsprechend der Entschlüsselungsstruktur 17 entschlüsselt wurden. Alle anderen Komponenten 40 und Komponentengruppen 42 des entschlüsselten Softwaremodells 35 bleiben verschlüsselt und unterliegen nicht dem Zugriff des Entwicklers 30.

In dem Entschlüsselungsschritt S7 prüft das DEC-Modul 33 anhand der in Schritt S5 in das verschlüsselte Softwaremodell 22 integrierten Attributierung, welche Komponentengruppen 42 des verschlüsselten Softwaremodells 22 durch die in Schritt S3 in den geheimen Schlüssel 21 integrierten Listeneinträge spezifiziert werden. Nur wenn die dem geheimen Schlüssel 21 gewährten Zugriffsrechte denjenigen Zugriffsrechten entsprechen, die in dem verschlüsselten Softwaremodell 22 für diesen Schlüssel 21 hinterlegt sind, werden die betreffenden Komponenten 40 bzw. Komponentengruppen 42 entschlüsselt und das entschlüsselte Softwaremodell 36 erzeugt.

Bei der Erzeugung der Entschlüsselungsstruktur 17 (*dstr*) in Schritt S2 wird eine gemeinsame Entschlüsselungsstruktur 17 für alle Entwickler 30 erzeugt, welche die Zugriffsrechte aller Entwickler 30 definiert. In Schritt S5 wird die Attributierung in das verschlüsselte Softwaremodell 22 integriert und in Schritt S3 wird derjenige Teil der gemeinsamen Entschlüsselungsstruktur 17 in den geheimen Schlüssel 21 übernommen, der die Zugriffsrechte desjenigen Entwicklers 30 betrifft, dessen geheimer Schlüssel 21 erzeugt wird. Alternativ kann aber auch für jeden Entwickler 30 eine eigene, individuelle Entschlüsselungsstruktur 17 erzeugt werden, die nur diejenigen Komponenten 40 und Komponentengruppen 42 definiert, die der betreffenden Entwickler 30 entschlüsseln können soll. Das verschlüsselte Softwaremodell in Schritt S5 wird jedoch so erzeugt, dass es die Zugriffsrechte aller geheimen Schlüssel 21 betrifft, damit es allen Entwicklern 30 identisch bereitgestellt werden kann.

Das Verfahren gemäß den Schritten S1 bis S7 basiert auf dem Ansatz, dass sämtliche benötigten Zugriffsrechte initial in Schritt S2 in Form von Listeneinträgen aus Attributen 41 in der Entschlüsselungsstruktur 17 hinterlegt werden und abhängig von den den jeweiligen Entwicklern 30 bereitzustellenden Zugriffsrechte einzeln in die in Schritt S3 erzeugten geheimen Schlüssel 21 integriert werden. In der Praxis kommt es jedoch vor, dass einem Entwickler 30, der bereits in Besitz eines geheimen Schlüssels 21 ist, nachträglich weitere Zugriffsrechte zugewiesen werden sollen. Der in Schritt S3 initial erzeugte geheime Schlüssel 21 muss dann um weitere Zugriffsrechte erweitert werden; der betreffende Entwickler 30 benötigt also einen entsprechend erweiterten geheimen Schlüssel 37 (*skey'*). Die Erweiterung des geheimen Schlüssels 21 um weitere Zugriffsrechte wird von der zentralen Instanz 10 koordiniert, denn die einzelnen Entwickler 30 haben keine Möglichkeit die Rechte ihrer geheimen Schlüssel 21 autonom zu verändern oder zu erweitern. Insbesondere werden die geheimen Schlüssel 21 so erzeugt, dass es den Entwicklern 30 nicht möglich ist, zwei existierende geheime Schlüssel 21 und deren Zugriffsrechte zu kombinieren.

Sofern ein Entwickler 30 weitere Zugriffsrechte auf Komponenten 40 bzw. Komponentengruppen 42 des Softwaremodells 16 benötigt, erzeugt die zentralen Instanz in Schritt S8 zunächst eine entsprechend erweiterte Entschlüsselungsstruktur (*dstr*'). Die erweiterte Entschlüsselungsstruktur kann entweder auf der bereits in Schritt S2 erzeugten Entschlüsselungsstruktur 17 basieren, oder unabhängig von dieser neu erzeugt werden [*dstrgen*=*dstr'*]. Hierbei werden nur die durch die Listeneinträge vorgegebenen Zugriffsrechte geändert oder erweitert, die Attributierung des Softwaremodells 16 bleibt jedoch unverändert. In Schritt S9 wird dann eine Schlüsselerweiterung 23 (*ext*) erzeugt, die diejenigen Zugriffsrechte betrifft, welche von der erweiterten Entschlüsselungsstruktur (*dstr'*) bereitgestellt werden [*extkey(dstr')*=*ext*].

Die Schlüsselerweiterungen 23 werden vorzugsweise ebenso wie die geheimen Schlüssel 21 durch das KEYGEN-Modul 13 erzeugt. Ebenso kann hierfür aber auch ein separates EXTKEY-Modul bei der zentralen Instanz 10 bereitgestellt werden, da die geheimen Schlüssel 21 und die Schlüsselerweiterungen 23 nach unterschiedlichen Verfahren erzeugt werden. Dies äußert sich bereits darin, dass die Schlüsselerweiterung 23 kein eigenständiger geheimer Schlüssel ist und insofern nicht ohne weiteres zum Entschlüsseln eines verschlüsselten Softwaremodells 22, 24 verwendet werden kann. Ebenso wenig wird für die Schlüsselerweiterung 23 die Attributierung der Komponenten 40 des Softwaremodells 16 geändert. Vielmehr transportiert die Schlüsselerweiterung 23 lediglich die weiteren Zugriffsrechte basierend auf der bestehenden Attributbelegung und muss mit einem bereits existierenden geheimen Schlüssel 21 geeignet verknüpft werden, damit die weiteren Zugriffsrechte auf den ursprünglichen geheimen Schlüssel 21 übergehen. Nachdem die Schlüsselerweiterung 23 in Schritt S10 an den Entwickler 30 übertragen wurde, kombiniert dieser in Schritt S13 die Schlüsselerweiterung 23 mit dem ursprünglichen geheimen Schlüssel 21 [*mergekey(skey, ext)*=*skey'*] und erzeugt einen erweiterten geheimen Schlüssel 37 (*skey'*). Die Kombination der Schlüsselerweiterung 23 mit dem entsprechenden geheimen Schlüssel 21 wird mittels des MERGE-Moduls 34 durchgeführt.

Falls die erweiterten Zugriffsrechte des erweiterten geheimen Schlüssels 37 nicht erfordern, dass das Softwaremodell 16 erneut verschlüsselt wird, kann ein dem Entwickler 30 bereits vorliegendes verschlüsseltes Softwaremodell 22 in Schritt S14 erneut entschlüsselt werden, um die weiteren Komponenten 40 bzw. Komponentengruppen 42 zu entschlüsseln. Bei dem in Figur 2 dargestellten Fall, dass die dem Entwickler 30 zusätzlich einzuräumenden Zugriffsrechte nicht bereits in Schritt S2 in der ursprünglichen Entschlüsselungsstruktur 17 hinterlegt wurden, zum Beispiel weil die betreffende weitere Komponentengruppe 42 bisher noch nicht vorgesehen war, verschlüsselt die zentrale Instanz 10 das Softwaremodell 16 in Schritt S11 erneut mit dem zentralen öffentlichen Schlüssel 19 und der erweiterten Entschlüsselungsstruktur (*dstr'*), um so ein modifiziertes verschlüsseltes Softwaremodell 24 (*emod'*) zu erzeugen [*enc(mod, pkey, dstr')*=*emod'*] und in Schritt S12 an den Entwickler 30 zu übertragen.

Die konkrete Abfolge der Schritte der Figur 2 ist nur beispielhaft zu verstehen, denn jede beliebige andere Abfolge der Schritte, die den Erfindungszweck verwirklicht, ist ebenso von der Erfindung umfasst. So können zum Beispiel die Schritte S3 bis S6 in anderer Reihenfolge ausgeführt werden, denn es ist für den Erfindungszweck unerheblich, ob zuerst der geheime Schlüssel 21 erzeugt und übertragen wird, oder zuerst das verschlüsselte Softwaremodell 22. Insbesondere können der geheime Schlüssel 21 und das verschlüsselte Softwaremodell 22 auch in einem gemeinsamen Schritt an den Entwickler 30 übertragen werden. Entsprechendes gilt zum Beispiel auch für die Schritte S9 bis S12 und die Verfahren gemäß den Figuren 4, 5 und 7.

Gemäß einer besonders bevorzugten Ausführungsform der vorliegenden Erfindung wird das in Zusammenhang mit den Figuren 1 und 2 beschriebene Verfahren auf die Verschlüsselung von technischen Systemen angewandt, die ein virtuelles Steuergerät und/oder ein zu steuerndes oder zu regelndes Gerät oder System betreffen, beispielsweise einen Fahrzeugmotor oder dergleichen. Das entsprechende Softwaremodell 16 besteht aus mehreren Komponenten 40, die hierarchisch strukturiert sind, beispielsweise in Form einer Baumstruktur oder eines gerichteten Graphen. Die Erfindung ist auf derartig strukturierte Softwaremodelle 16 jedoch nicht beschränkt, sondern ist gleichermaßen anwendbar auf jedes beliebige komponentenbasierte Softwaremodell 16, bei dem die einzelnen Komponenten 40 in technischen, organisatorischen oder anderweitigen Relationen zueinander stehen. Die Komponenten 40 repräsentieren hierbei bestimmte Codesequenzen, Programmmodule, Programmmodelle oder Beschreibungen des modellierten technischen Systems, beispielsweise in Form von XML-Dateien oder dergleichen. Bei einem komponentenweise hierarchisch strukturierten Softwaremodell 16 eines Steuergeräts und/oder zu steuernden oder zu regelnden technischen Geräts oder Systems kann jede Komponente 40 ein oder mehrere Unterkomponenten enthalten, wobei es eine Wurzelkomponente gibt, die das gesamte modellierte technische System bzw. das gesamte modellierte Steuergerät repräsentiert. Bis auf die Wurzelkomponente ist jede weitere Softwarekomponente Teil von genau einer weiteren, übergeordneten Softwarekomponente.

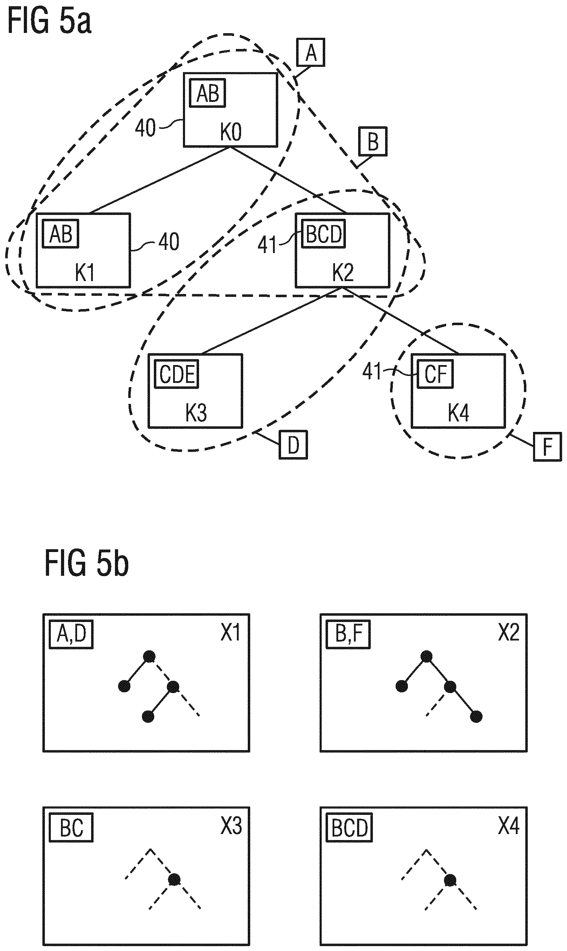

Die Figuren 4 bis 7 zeigen beispielhafte Baumstrukturen eines komponentenweise organisierten Softwaremodells 16, wobei die mit K0 bezeichnete Komponente der Figuren 4 und 5 ein virtuelles Steuergerät betrifft, die mit K1 und K2 bezeichneten Komponenten 40 Module dieses virtuellen Steuergeräts und die mit K3 und K4 bezeichneten Komponenten 40 wiederum Untermodule oder Softwareteile der Softwarekomponente K2. Die einzelnen Softwarekomponenten 40 sind hierbei entweder rein softwarearchitektonischer Natur oder repräsentieren selbstständig verwendbare oder technisch abgeschlossene Teile des zu modellierenden technischen Systems, die gegebenenfalls selbständig ausführbar oder nutzbar sind.

In diesem Zusammenhang zeigt die Figur 3 die Testumgebung 102 eines HIL-Simulators mit verschiedenen Softwaremodellen 108 eines von einem realen Steuergerät 120 zu steuernden virtuellen technischen Geräts oder Systems. Das Bezugszeichen 104 bezeichnet Eingabe-/Ausgabeschnittstellen der Testumgebung 102 zum Anschluss an das reale Steuergerät 120 über Schnittstellenkabel 122. Das Bezugszeichen 106 bezeichnet Eingabe-/Ausgabefunktionen der Testumgebung 102, die durch Verbindungen zwischen der Schnittstelle 104 und den verschiedenen Softwaremodellen 108 gekoppelt sind und Signale umsetzen oder transformieren, die von dem realen Steuergerät 120 an die Softwaremodelle 108 und umgekehrt gerichtet sind. Mit der beispielhaften Anordnung gemäß Figur 3 wird die Funktionalität des realen Steuergeräts 120 anhand der Interaktion mit den verschiedenen Softwaremodellen 108 getestet. Andererseits werden die Softwaremodelle 108 derart weiterentwickelt, dass sie auf die Steuerung des Steuergeräts 120 adäquat reagieren. Hierbei wird also durch Simulation getestet, ob sich das Steuergerät 120 wie gewünscht verhält und die verschiedenen Softwaremodelle 108 des zu steuernden oder zu regelnden technischen Systems wie gewünscht ansteuert.

Umgekehrt ist es auch möglich, dass ein Softwaremodell 108 ein Steuergerät modelliert und ein zu steuerndes, reales System über die Kabel 122 an die Testumgebung 102 angeschlossen ist. Ebenso ist es möglich, dass sowohl das Steuergerät als auch das zu steuernde System in Form von Softwaremodellen 108 in der Testumgebung 102 hinterlegt sind, um in einem frühen Entwicklungsstadium das gesamte technische System zu testen. Um Fehler beim Zusammenwirken verschiedener Steuergeräte aufzufinden, können mittels der Testumgebung 102 auch Integrationstests durchgeführt werden, bei denen mehrere Steuergeräte 120 an einem HIL-Simulator angeschlossen sind und gleichzeitig getestet werden. Von diesem mehreren Steuergeräten liegt dann typischerweise zumindest eines in Form eines Softwaremodells 108 vor.

Während die Anordnung der Figur 3 einen typischen HIL-Simulator repräsentiert, bei dem ein einzelnes Steuergerät 120 einer Echtzeit-Simulation unterzogen wird, repräsentiert der umgekehrte Fall, in dem ein einzelnes Steuergerät als Softwaremodell 108 vorliegt, eine typische RCP-Testumgebung. Neben dem zuvor angedeuteten Szenario eines HIL-Simulators mit mehreren daran angeschlossenen Steuergeräten 120, von denen zumindest eines als Softwaremodell 108 vorliegt, bietet das RCP-Testszenario eine weitere Möglichkeit, ein als Softwaremodell 108 vorliegendes Steuergeräts 120 zu testen.

In jedem Falle kann das zu steuernde oder zu regelnde technische System ein beliebiges technisches Gerät oder System sein, auch ein weiteres vorhandenes Steuergerät, das wiederum an ein zu steuerndes technisches System angeschlossen ist und an dem in der Testumgebung 102 Steuerfunktionalitäten getestet oder weiterentwickelt werden können. In Zusammenhang mit der vorliegenden Erfindung werden die Softwaremodelle 108 von der zentralen Instanz 10 verschlüsselt und an die Entwickler 30 zur dortigen Weiterentwicklung übertragen.

Figur 4 veranschaulicht die erfindungsgemäßen Verfahren anhand eines hierarchisch organisierten Softwaremodells 16 mit Softwarekomponenten 40, welche als Rechtecke dargestellt sind, die einen Graphen bilden, und mit K0 bis K4 bezeichnet sind.

Angelehnt an das Verfahren gemäß Figur 2 wird in Schritt S100 der Figur 4 ein Initialisierungsprozess ausgeführt (*setup*), in dessen Rahmen der Masterschlüssel sowie der zentrale öffentliche Schlüssel 19 erzeugt werden. Im Rahmen der Initialisierung wird auch die Entschlüsselungsstruktur 17 erzeugt, die einerseits die Attributbelegung des Softwaremodells 16 (linke Seite des Kastens 17) und davon ausgehend andererseits die Zugriffsrechte in Form von Listeneinträgen (rechte Seite des Kastens 17) umfasst, die Komponentengruppen 42 definieren, welche für die Entwickler 30 mittels individueller geheimer Schlüssel 21 entschlüsselbar sein sollen. Der Initialisierungsschritte S1 in Figur 2 bzw. S100 in Figur 4 muss nicht für jedes weitere zu verschlüsselnde Softwaremodell 16 erneut ausgeführt werden, denn der Masterschlüssel und der öffentliche Schlüssel 19 können in der Regel wiederverwendet werden, selbst wenn andere Komponenten 40 und Komponentengruppen 42 oder Attribute 41 definiert oder verwendet werden.

Die Attributierung belegt die Komponenten K0 bis K4 jeweils mit einem oder mehreren der Attribute A, B und C. Der Wurzelkomponente K0 sind die Attribute ABC zugeordnet, den beiden darunterliegenden Komponenten K1 und K2 der ersten Hierarchieebene die Attribute A und BC und den beiden Komponenten K3 und K4 der zweiten Hierarchieebene die Attribute B und C. Diese Attributierung dient der einfachen Gruppierung der Komponenten 40 zu Komponentengruppen 42, für deren Bearbeitung den Entwicklern 30 mittels der Liste Zugriffsrechte eingeräumt werden. Die Liste wiederum besitzt drei Einträge, nämlich einen Eintrag mit dem Attribut A, einen mit dem Attribut B und einen Eintrag mit dem Attribut C. Jeder der Einträge definiert eine Komponentengruppe 42, nämlich diejenige, deren Komponenten 40 zumindest das jeweils angegebene Attribut 41 tragen.

Wie in Zusammenhang mit Figur 2 beschrieben, tragen die individuellen geheimen Schlüssel 21 jeweils zumindest einen Teil der Entschlüsselungsstruktur 17 in sich, nämlich genau denjenigen Teil, der den betreffenden geheimen Schlüssel 21 befähigt, genau diejenigen Komponenten 40 zu entschlüsseln, die der betreffenden Definition entsprechen. In dem Ausführungsbeispiel gemäß Figur 4 sind dies diejenigen Listeneinträge, die den entsprechenden geheimen Schlüssel 21 befähigen, die von der zentralen Instanz 10 vorgesehene Komponentengruppe 42 zu entschlüsseln.

Nach dem Verschlüsseln des Softwaremodells 16 in Schritt S200 (*enc*) werden in Schritt S300 jeweils drei geheime Schlüssel 21 für drei verschiedene Entwickler 30 erzeugt (*keygen*), wobei einer der geheimen Schlüssel 21 den Listeneitrag mit dem Attribut A trägt, so dass mit diesem Schlüssel die Komponentengruppe 42 bestehend aus denjenigen Komponenten 40 entschlüsselt werden kann, die zumindest das Attribut A tragen. Zwei weitere geheime Schlüssel 21 tragen die Listeneinträge mit dem Attribut B und dem Attribut C. Die zentrale Instanz 10 hat die vollständige Kontrolle darüber, welche Softwarekomponenten 40 zu einer Komponentengruppe 42 zusammengefasst werden und einem berechtigten Entwickler 30 zur Entschlüsselung freigegeben werden. Deshalb wird die Entschlüsselungsstruktur 17 auch zumindest teilweise in das verschlüsselte Softwaremodell 22 integriert, damit später ein Abgleich erfolgen kann, ob ein bestimmter geheimer Schlüssel 21 zur Entschlüsselung einer bestimmten Komponentengruppe 42 berechtigt ist. In dem Ausführungsbeispiel gemäß Figur 4 ist dies die Attributierung der Komponenten 40. Die erzeugten geheimen Schlüssel 21 werden neben dem verschlüsselten Softwaremodell 22 schließlich in Schritt S400 an die jeweiligen Entwickler X1, X2 und X3 übertragen.

Anhand der beschriebenen Schritte wird deutlich, dass ein Teil der Entschlüsselungsstruktur 17 in das verschlüsselte Softwaremodell 22 integriert wird, gemäß Figur 4 also die Attributierung, und ein anderer Teil in die geheimen Schlüssel 21, gemäß Figur 4 also die Listeneiträge, die die entschlüsselbaren Komponentengruppen 42 definieren. Zur Entschlüsselung werden beide Teile benötigt, also die vollständige Entschlüsselungsstruktur 17, wobei die Attributierung und die Listeneinträge abweichend von der in den Figuren 2 und 4 verwendeten Key-Policy (KP) auch genau umgekehrt, nämlich gemäß einer Ciphertext-Policy (CP) in das verschlüsselte Softwaremodell 22 und die geheimen Schlüssel 32 integriert werden können. Die Ausführungsformen der Figuren 2 und 4 können auch gemäß einer Ciphertext-Policy abgewandelt werden, ohne dass von dem erfindungsgemäßen Kern abgewichen werden müsste.

In Schritt S500 entschlüsselt jeder der drei Entwickler 30 das verschlüsselte Softwaremodell 22 mit dem ihm zugeordneten individuellen geheimen Schlüssel 21, so dass jeweils verschiedene Komponentengruppen 42 entschlüsselt werden (*dec*), abhängig davon, welche Listeneinträge der betreffende geheime Schlüssel 21 trägt. Der Entwickler X1 kann insofern nur diejenige Komponentengruppe 42 entschlüsseln, deren Komponenten 40 zumindest das Attribut A tragen. Entsprechend können die Entwickler X2 und X3 jeweils mit ihren individuellen geheimen Schlüsseln 21 lediglich diejenigen Komponentengruppen 42 entschlüsseln, deren Komponenten 40 zumindest das Attribut B oder das Attribut C tragen. Die drei verschiedenen entschlüsselten Softwaremodelle 35 weisen also lediglich die von dem jeweiligen geheimen Schlüssel 21 vorgegebene Komponentengruppe 42 in entschlüsselter Form auf, während alle weiteren Komponenten 40, die das betreffende Attribut 41 nicht tragen, verschlüsselt bleiben. Es werden also nur diejenigen Komponenten 40 des Softwaremodells 16 entschlüsselt, die durch den geheimen Schlüssel 21 definiert werden.

Figur 5 zeigt beispielhaft eine Strategie zur Erstellung von Zugriffsrechten mittels geeigneter Attributbelegungen. Bei der Attributierung des hierarchischen Softwaremodells 16 gibt es in der Regel einige Nebenbedingungen, insbesondere kann zu beachten sein, dass wenn eine bestimmte Komponente 40 für einen Entwickler 30 entschlüsselbar sein soll, auch die entsprechend übergeordnete Komponente 40 von diesem Entwickler 30 entschlüsselbar sein muss. Dies ist beispielsweise dann gegeben, wenn eine übergeordnete Softwarekomponente 40 ein Ordner ist und die diesem Ordner untergeordneten Unterkomponenten 40 Dateien mit Programmcode repräsentieren. In diesem Fall kann eine untergeordnete Datei von einem Entwickler 30 nämlich nicht entschlüsselt werden, wenn nicht auch der Ordner entschlüsselt werden kann, in dem diese Datei abgelegt ist.

Prinzipiell besteht die Strategie zum Erzeugen einer Entschlüsselungsstruktur 17, welche die von der zentralen Instanz 10 gewünschten Komponentengruppen 42 basierend auf einer geeigneten Attributierung definiert, aus zwei Schritten, nämlich zunächst dem Festlegen von Komponentengruppen 42 durch technisch sinnvolles oder notwendiges Zusammenfassen von Komponenten 40 und anschließendem Zuordnen von einem oder mehreren Attributen 41 zu den einzelnen Komponenten 40 des Softwaremodells 16 derart, dass die zuvor festgelegten Komponentengruppen 42 mittels dieser Attribute 41 eindeutig beschrieben werden können, beispielsweise als Listeneinträge in Form von aussagelogischen Ausdrücken. Die Einträge in der Liste der Entschlüsselungsstruktur 17 beschreiben dann jeweils eindeutig eine Gruppe von Komponenten 40, für die ein bestimmter Entwickler 30 gemeinsam zugriffsberechtigt sein soll bzw. aus technischen Gründen sein muss. Andere Listeneinträge können dem gleichen Entwickler 30 Zugriffsrechte auf weitere Komponentengruppen 42 einräumen.

Hierzu analysiert die zentrale Instanz 10 zunächst für jede einzelne Softwarekomponente 40 die dieser untergeordneten Komponenten 40 und entscheidet anhand von technischen, sicherheitsrelevanten, organisatorischen oder anderweitig relevanten Kriterien, welche Komponenten 40 des hierarchischen Softwaremodells 16 zu Komponentengruppen 42 zusammen gefasst werden sollen. Eine Komponentengruppe 42 umfasst beispielsweise diejenigen Softwarekomponenten 40, die von einem Entwickler 30 immer zusammen bearbeitet werden müssen sowie die von diesen abhängigen Komponenten 40. Sobald auf diese Weise sämtliche Komponentengruppen 42 definiert sind, können den einzelnen Komponenten 40 Attribute 41 derart zugewiesen werden, dass die Komponenten 40 einer Komponentengruppe 42 im einfachsten Fall mindestens ein übereinstimmendes Attribut 41 aufweisen, welches die Komponenten 40 aller anderen Komponentengruppen 42 nicht aufweisen. In komplexerer Weise kann eine Komponentengruppe 42 auch dadurch eindeutig beschrieben werden, dass deren Komponenten 40 eine bestimmte Kombination von Attributen 41 aufweisen, die keine andere Komponente 40 aufweist, die nicht Bestandteil dieser Komponentengruppe 42 sein soll.

Allgemein können die Attribute 40 mit aussagenlogischen Operatoren, wie zum Beispiel UND, ODER, XOR (exklusives ODER) oder NOT verknüpft werden. Eine Komponentengruppe 42 wird dann durch diejenigen Komponenten 40 gebildet, deren Attribute 41 gemäß einer vorgegebenen aussagelogischen Verknüpfung eine wahre Aussage ergeben, also durch diejenigen Komponenten 40, deren Attribute 41 diese Aussage erfüllen. Beispielsweise kann eine Komponentengruppe 42 alle Komponenten 40 umfassen, die das Attribut A aufweisen, und eine andere Komponentengruppe 42 kann diejenigen Komponenten 40 umfassen, die das Attribut B aufweisen. Eine dritte Komponentengruppe 42 kann dann beispielsweise alle jene Komponenten 40 umfassen, die entweder das Attribut A oder das Attribut B aufweisen, also alle jene Komponenten 40, für welche die Aussage "A ODER B" wahr ist.

Gemäß der bevorzugten Ausführungsform der Figur 5 wird eine Komponentengruppe 42 innerhalb der Entschlüsselungsstruktur 17 dadurch definiert, dass genau diejenigen Komponenten 40 zu der betreffenden Komponentengruppe 42 gehören, die mindestens ein zum Zwecke der Definition der Komponentengruppe 42 vorgegebenes Attribut oder mindestens die zu diesem Zweck vorgegebene Attributkombination aufweisen.

Das hierarchische Softwaremodell 16 der Figur 5a umfasst eine Wurzelkomponente K0, die ein virtuelles Steuergerät repräsentiert, sowie Unterkomponenten K1 bis K4, die einzelne technische Bestandteile dieses virtuellen Steuergeräts modellieren. Den Komponenten K0 bis K4 sind jeweils unterschiedliche Attributkombinationen zugeordnet, die aus einem oder mehreren der Einzelattribute A, B, C, D, E und F bestehen. Anhand der Baumstruktur ist ersichtlich, dass die Definition einer Komponentengruppe 42 durch das Attribut A die Komponenten K0 und K1 zusammenfasst, also diejenigen Komponenten 40, deren Attribute 41 wenigstens das Attribut A aufweisen. Eine Komponente 40, die außer dem Attribut A noch weitere Attribute 41 umfasst, ist also ebenfalls Bestandteil der durch das Attribut A definierten Komponentengruppe 42. Entsprechend besteht die durch das Attribut B definierte Komponentengruppe 42 aus den Komponenten K0, K1 und K2, die durch das Attribut D definierte Komponentengruppe 42 besteht aus den Komponenten K2 und K3, und die durch das Attribut F definierte Komponentengruppe 42 besteht aus der Komponente K4.

Die Figur 5b zeigt verschiedene Komponentengruppen 42, die durch Listeneinträge einer Entschlüsselungsstruktur 17 definiert sind, und von vier verschiedenen Entwicklern 30 (X1, X2, X3, X4) mittels deren individuellen geheimen Schlüsseln 21 entschlüsselt werden können. Die vier angegebenen Attributkombinationen (A, D), (B, F), (BC) und (BCD) repräsentieren Listeneinträge der Entschlüsselungsstruktur 17 für das Softwaremodell 16, welche in die geheimen Schlüssel 21 für die Entwickler X1, X2, X3 und X4 integriert wurden. Hierbei definieren die Attributkombinationen (A, D) und (B, F) jeweils zwei Komponentengruppen 42, währen die durch eine UND-Operation verknüpften Attributkombinationen (BC) und (BCD) jeweils eine Komponentengruppe 42 definieren. Aus der vollständigen Liste der Entschlüsselungsstruktur [(A, D), (B, F), (BC), (BCD)] werden beim Erzeugen der geheimen Schlüssel 21 für die jeweiligen Entwickler 30 also jeweils nur diejenigen Listeneiträge in den betreffenden geheimen Schlüssel 21 übernommen, auf deren Komponentengruppen 42 der betreffende Entwickler 30 Zugriff haben soll.

Die Figur 5 veranschaulicht nochmals die beiden Teile der Entschlüsselungsstruktur 17 aus Figur 4 gemäß einer Key-Policy, nämlich einerseits die in das Softwaremodell 16 integrierte Attributierung der einzelnen Komponenten 40 (Figur 5a) und die in die jeweiligen geheimen Schlüssel 23 integrierten Listeneiträge (Figur 5b).

Gemäß dem Beispiel der Figur 5b hat der Entwickler X1 entsprechend Zugriff auf zwei Komponentengruppen 42, nämlich auf diejenige, die durch das Einzelattribut A definiert wird und aus den Komponenten K0 und K1 besteht, und diejenige, die durch das Einzelattribut D definiert wird und aus den Komponenten K2 und K3 besteht. Entsprechend hat der Entwickler X2 Zugriff auf die beiden Komponentengruppen 42, die jeweils durch die Einzelattribute B und F definiert werden. Die Entwickler X3 und X4 haben jeweils nur Zugriff auf eine Komponentengruppe 42, wobei die angegebenen Attributkombinationen (BC) und (BCD) diejenigen Komponenten 40 bezeichnen, die wenigstens diese Attributkombination aufweisen. Es zeigt sich, dass beide Entwickler X3 und X4 lediglich Zugriff auf die Komponente K2 haben, da die Attribute 40 der Komponente K2, sowohl die Attributkombination (BC) als auch die Attributkombination (BCD) umfassen.

Eine derartige Entschlüsselungsstruktur 17 wird als "monoton" bezeichnet, denn die Entschlüsselung einer entsprechenden Komponente 40 ist bereits dann erlaubt, wenn diese Komponente 40 mindestens die Attribute umfasst, die der entsprechende Eintrag in der Liste der Entschlüsselungsstruktur 17 angibt. Die Regel für die Definition von Komponentengruppen 42 ist hierbei, dass eine Komponente 40 einerseits alle Attribute 41 einer Definition eines Listeneintrags aufweisen muss, um zu einer Komponentengruppe 42 zu gehören, dass es andererseits aber auch mehr Attribute 41 sein können.

Alternativ zu dieser UND-Regel kann auch eine ODER-Regel angewandt werden, die dann besagt, dass eine Komponente 40 nur eines der Attribute 41 aufweisen muss, die eine Definition eines Listeneintrags der Entschlüsselungsstruktur 17 angibt. Ein Beispiel für eine ODER-Regel anhand des Softwaremodells 16 der Figur 5a wäre demzufolge, dass die Attributkombination (AF) die Komponentengruppe 42 bestehend aus den Komponenten K0, K1 und K4 definiert, da diese Komponenten entweder das Attribut A oder das Attribut F aufweisen.

Wie bereits angesprochen können Komponentengruppen 42 allgemein mittels logischer Aussagen definiert werden, so dass es auch möglich ist, die Attribute 41 einer Komponente 40 durch komplexere Aussagen aus verschiedenen logischen Operatoren zu verknüpfen und diese Komponente 40 der betreffenden Komponentengruppe 42 zuzuordnen, wenn diese Aussage wahr ist. Vor dem Hintergrund der in Figur 5b verwendeten Notation kann ein Listeneintrag (AB) also als Aussage "A UND B" interpretiert werden und die Listeneinträge (A, B) als Aussage "A ODER B". Die Listeneinträge (AB, C) repräsentieren also die Aussage "(A UND B) ODER C", die alle Komponenten 40 zu einer Komponentengruppe 42 zusammenfasst, die entweder beide Attribute A und B aufweisen oder das Attribut C. Entsprechend würde beispielsweise der aussagenlogische Ausdruck "NOT A XOR B" die Komponenten K0, K1, K3, K4 zu einer Komponentengruppe 42 zusammenfassen, denn diese Komponenten besitzen entweder beide Attribute A und B oder keines dieser Attribute.

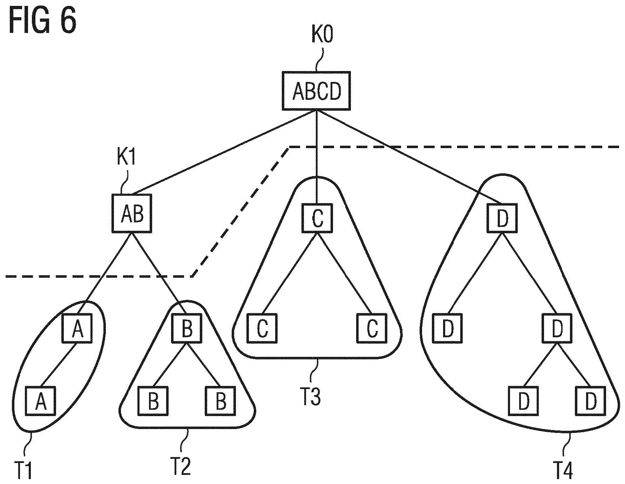

Figur 6 veranschaulicht eine besonders bevorzugte Ausführungsvariante der vorliegenden Erfindung in Zusammenhang mit besonders komplexen hierarchischen Strukturen des Softwaremodells 16. Bei weitläufigen Komponentenhierarchien sind die nahe der Wurzelkomponente angesiedelten Komponenten 40 häufig triviale Komponenten 40, die keine sensiblen bzw. technische relevanten Daten oder Informationen tragen, sondern lediglich der Strukturierung von untergeordneten, technisch relevanten Komponenten 40 dienen. Derartige triviale Komponenten 40 sind beispielsweise Ordner, deren untergeordnete Komponenten 40 die eigentlichen Funktionen oder Funktionsbibliotheken in Form von Dateien bereitstellen. Solche trivialen Komponenten 40 sind dadurch gekennzeichnet, dass sie einerseits keinerlei technisch relevante Information tragen, andererseits aber durch die Entwickler 30 entschlüsselbar sein müssen, um Zugriff auf die technisch relevanten, untergeordneten Komponenten zu erhalten. Die Komponentenstruktur der Figur 6 zeigt oberhalb der gestrichelten Linie zwei trivialen Komponenten, nämlich einerseits die Wurzelkomponente K0, die einen Ordner repräsentiert, der das gesamte modellierte technische System enthält, sowie die Komponente K1, die einen Ordner mit technisch relevanten Komponenten darstellt.

Triviale Komponenten können von der zentralen Instanz 10 auf einfache Weise manuell oder auch automatisiert identifiziert werden. Die verbleibenden Komponenten, also diejenigen unterhalb der gestrichelten Linie in Figur 6 bilden dann mehrere Teilbäume T1, T2, T3 und T4, die separat und unabhängig voneinander mit Attributen 41 belegt werden. Für jeden Teilbaum wird eine separate Entschlüsselungsstruktur 17 erzeugt, da es aufgrund der Komplexität des Softwaremodells 16 zweckmäßig ist, die Teilbäume getrennt voneinander mit Attributen zu versehen und auch separate Entschlüsselungsstrukturen 17 aufzubauen. Die Zugriffsrechte eines Entwicklers 30 können dabei aber verschiedene Teilbäume betreffen, indem sein geheimer Schlüssel 21 Definitionen aus mehreren Entschlüsselungsstrukturen 17 aufweist.

Beim Erstellen von Attributbelegungen und Entschlüsselungsstrukturen 17 für die Teilbäume T1 bis T4 werden die trivialen Komponenten K0 und K1 so berücksichtigt, dass sie von jedem Entwickler entschlüsselt werden können, beispielsweise indem allen trivialen Komponenten ein Attribut zugewiesen wird, das anschließend mit jedem geheimen Schlüssel 21 entschlüsselbar ist. Entsprechend trägt die Wurzelkomponente K0 alle vorkommenden Attribute (ABCD), so dass jede Definition, die einen der Teilbäume T1, T2, T3 und T4 zu einer Komponentengruppe zusammenfasst, auch die Wurzelkomponente K0 umfasst. Die Komponente K1 trägt lediglich die Attribute der Teilbäume T1 und T2 (AB), so dass einerseits jede Definition, die einen der Teilbäume T1 oder T2 zu einer Komponentengruppe zusammenfasst, auch die triviale Komponente K1 umfasst. Andererseits umfasst eine Definition, die einen der Teilbäume T3 und T4 zu einer Komponentengruppe zusammenfasst, aber nicht die triviale Komponente K1. Auf die gleiche Weise können nicht nur triviale Komponenten, sondern auch essentielle Komponenten behandelt werden, also solche Komponenten 40, die derart wichtige Daten und Informationen tragen, dass jeder Entwickler 30 auf diese Zugriff haben muss.

Dieses Identifizieren von trivialen bzw. essentiellen Komponenten und das gesonderte Attributieren der hieraus entstehenden Teilbäume kann auf alle Softwaremodelle 16 angewendet werden, die hierarchisch aufgebaut sind, insbesondere auf Softwaremodelle 16 von Steuergeräten und/oder zu steuernden Geräten oder Systemen, die gemäß dem AUTOSAR-Standard modelliert sind. In diesem Zusammenhang gelten beispielsweise Ordner, ARXML-Dateien und ARPackages als triviale Komponenten, die lediglich andere Komponenten enthalten bzw. auf diese verweisen. Die resultierenden Teilbäume können wiederum als eigenständige Softwaremodelle 16 interpretiert werden, die jeweils in einem ARPackage liegen. In Zusammenhang mit dem AUTOSAR-Standard können beispielsweise "data types" und "data type properties", "port interfaces", "software components" sowie "implementations" als Teilbäume und insofern als eigenständige Softwaremodelle modelliert werden. Solche AUTOSAR-Softwareobjekte können separat vom übrigen Softwaremodell 16 autonom und nach geeigneten Strategien attribuiert werden. Zum Beispiel werden "data types" zusammen mit den entsprechenden "data type properties" jeweils als eine zusammengehörige Komponente betrachtet. Ebenso können für "port interfaces" Komponentengruppen erstellt werden, die alle betreffenden Variablen bzw. Funktionen umfassen, oder es können "port interfaces" oder "data types" zu größeren Komponentengruppen zusammengefasst werden. Weiterhin können "software components" Komponentengruppen zusammen mit den entsprechenden "ports" oder weiteren Softwareelementen (z.B. "internal behaviours") bilden. Bei so genannten "implementations" können die realisierten Funktionen in Form von Komponentengruppen gruppiert werden. Da "implementations" zum Beispiel in Form von Quellcode oder Objektcode bestimmte Aufgaben realisieren, die verschiedenen Plattformen zugeordnet sein können, können "implementations" eine Komponentengruppe bilden, die für eine bestimmte Plattform realisiert werden oder eine bestimmte gemeinsame Aufgabe erfüllen.

In Zusammenhang mit Figur 7 wird schließlich eine besonders bevorzugte Ausführungsform der Erfindung beschrieben, die die Erweiterung der Entschlüsselungsrechte von bereits ausgegebenen geheimen Schlüsseln 21 betrifft, so wie dies bereits anhand der Schritte S8 bis S14 der Figur 2 erläutert wurde.

Um die Rechte von Entwicklern 30, auf ein ihnen bereits vorliegendes verschlüsseltes Softwaremodell 22 zugreifen zu können, zu erweitern, ist es erforderlich die mit dem betreffenden geheimen Schlüssel 21 verbundenen Zugriffsrechte, also die aus der Entschlüsselungsstruktur 17 integrierten Listeneinträge, so zu erweitern, dass der Entwickler 30 eine oder mehrere weitere Komponentengruppen 42 entschlüsseln kann. Hierzu werden zwei weitere Verfahren bzw. Algorithmen angewandt, nämlich einerseits die EXTKEY-Methode zum Erzeugen einer Schlüsselerweiterung 23 und andererseits die MERGEKEY-Methode zum Erweitern eines bereits existierenden geheimen Schlüssels 21 um die Rechte der Schlüsselerweiterung 23. Gemäß der Anordnung der Figur 1 wird die EXTKEY-Methode von dem KEYGEN-Modul 13 der zentralen Instanz 10 realisiert und die MERGEKEY-Methode von einem separaten MERGE-Modul 34 auf Seiten des Entwicklers 30.

Als Ausgangspunkt dieser Ausführungsform zu Beginn des Schrittes S600 in Figur 7 liegen dem Entwickler 30 sein geheimer Schlüssel 21 und eine entschlüsseltes Softwaremodell 35 vor, bei dem die durch das Attribut A definierte Komponentengruppe 42 entschlüsselt ist, während alle anderen Komponentengruppen 42 des zugrundeliegenden verschlüsselten Modells 22 verschlüsselt sind. Der Entwickler 30 benötigt nun beispielsweise Zugriff auf die weitere Komponentengruppe 42, die durch das Attribut B definiert wird.

Das Verfahren gemäß Figur 7 ermöglicht dem Entwickler 30 (X1) die Entschlüsselung auch dieser weiteren Komponentengruppe 42 ohne dass die zentrale Instanz 10 (Z) einen weiteren individuellen geheimen Schlüssel 21 für den Entwickler 30 erzeugen und diesen dem Entwickler 30 übergeben muss. Dieses Szenario tritt beispielsweise auf, wenn ein Entwickler 30 einen weiteren oder erweiterten Entwicklungsauftrag von der zentralen Instanz 10 erhält, der die Entwicklung weiterer, ihm bisher nicht zugänglicher Komponentengruppen 42 betrifft. Dies ist beispielsweise dann der Fall, wenn die Zuständigkeit für eine bestimmte Komponentengruppe 42 von einem Entwickler 30 auf einen anderen Entwickler 30 übergehen soll, oder wenn dem betreffenden Softwaremodell 16 im Laufe seiner Entwicklung eine weitere Komponentengruppe 42 hinzugefügt wurde, die nun von dem Entwickler 30 (X1) bearbeitet werden soll. Im erstgenannten Fall reicht es aus, den geheimen Schlüssel 21 des Entwicklers 30 um die Definition der neuen Komponentengruppe 42 zu erweitern, während es im zweiten Fall, also dem Hinzufügen einer gänzlich neuen Komponentengruppe 42 zu dem Softwaremodell 16, darüber hinaus erforderlich ist, dass auf Seiten der zentralen Instanz 10 eine entsprechend erweiterte neue Entschlüsselungsstruktur 17 erzeugt wird und das erweiterte Softwaremodell 16 erneut verschlüsselt und an die Entwickler 30 übertragen wird.

Im Schritt S600 stellt der Entwickler 30 eine Anfrage nach einer Erweiterung seines geheimen Schlüssels 21 an die zentrale Instanz 10. In Schritt S700 führt die zentrale Instanz 10 die EXTKEY-Methode aus und erzeugt die Schlüsselerweiterung 23 unter Verwendung des Masterschlüssels, einer Information über den zu erweiternden geheimen Schlüssel 21 des Entwicklers 30 und einer erweiterten Entschlüsselungsstruktur (*extkey*). Die Schlüsselerweiterung 23 ist hierbei abgestimmt auf den zu erweiternden geheimen Schlüssel 21 und kann von einem Entwickler 30 nur dann verwendet werden, wenn diesem der entsprechende geheime Schlüssel 21 vorliegt. Die Schlüsselerweiterung 23 ist also kein eigenständiger geheimer Schlüssel, sondern lediglich eine Datenstruktur, die die Definition einer für den Entwickler 30 bisher noch nicht zugänglichen Komponentengruppe 42 des Softwaremodells 16 umfasst, im Beispiel der Figur 7 also derjenigen Komponentengruppe 42, die durch das Attribut B definiert ist.

Nachdem die zentrale Instanz 10 dem Entwickler 30 die Schlüsselerweiterung 23 bereitgestellt hat, führt der Entwickler 30 in Schritt S800 die MERGEKEY-Methode unter Eingabe des bisherigen geheimen Schlüssels 21 und der erhaltenen Schlüsselerweiterung 23 aus (*mergekey*). Auf diese Weise wird der erweiterte geheime Schlüssel 37 erzeugt, der nun sowohl die Definitionen der durch das Attribut A charakterisierten Komponentengruppe 42 als auch der durch das Attribut B charakterisierten Komponentengruppe 42 trägt, also die Attribute (A, B). Anschließend entschlüsselt der Entwickler 30 in Schritt S900 das ihm bereits vorliegende verschlüsselte Softwaremodell 22 mit dem erweiterten geheimen Schlüssel 37 (*dec*), wodurch neben der durch das Attribut A definierten Komponentengruppe 42 auch diejenige Komponentengruppe 42 des Softwaremodells 16 entschlüsselt wird, durch das Attribut B definiert ist.

Da die Schlüsselerweiterung 23 kein eigenständiger geheimer Schlüssel 21 ist, sondern nur eingesetzt werden kann, um einen bereits existierenden geheimen Schlüssel 21 zu erweitern, muss die Schlüsselerweiterung 23 in Schritt S700 nicht notwendigerweise über einen sicheren Kommunikationskanal an den Entwickler 30 übertragen werden, wie es bei der Übertragung des zugehörigen geheimen Schlüssels 21 erforderlich ist, beispielsweise gemäß Schritt S4 der Figur 2 oder gemäß Schritt S400 der Figur 4. Die Schlüsselerweiterung 23 ist ohne den zugehörigen geheimen Schlüssel 21 wertlos. Deshalb muss die zentrale Instanz 10 auch nicht notwendigerweise in Schritt S600 prüfen, ob der Entwickler 30, von dem die betreffende Anfrage auf Erweiterung seines geheimen Schlüssels 21 kommt, auch berechtigt ist, die weitere Komponentengruppe 42 zu entschlüsseln. Vielmehr kann die zentrale Instanz 10 bei der Erzeugung der Schlüsselerweiterung 23 in Schritt S700 selbständig entscheiden, ob der zuvor erzeugte geheime Schlüssel 21 um die angeforderten Zugriffsrechte erweitert werden soll.

Die Prüfung auf Seiten des Entwicklers 30, ob die Schlüsselerweiterung 23 für den geheimen Schlüssel 21 bestimmt ist, kann entweder beim Erzeugen des erweiterten geheimen Schlüssels 37 in Schritt S800 (*mergekey*) erfolgen oder erst beim Anwenden des erweiterten geheimen Schlüssels 37 in Schritt S900 (*dec*). Um eine derartige Prüfung zu ermöglichen, enthält sowohl der geheime Schlüssel 21 als auch die Schlüsselerweiterung 23 ein spezielles Identifikationsmerkmal, die entweder in Schritt S800 oder erst in Schritt S900 auf Übereinstimmung bzw. Korrespondenz geprüft werden. Dieses Identifikationsmerkmal bezeichnet unmittelbar oder mittelbar den betreffenden geheimen Schlüssel 21 und dessen Vorliegen in der Schlüsselerweiterung 23 gibt denjenigen geheimen Schlüssel 21 an, für den die Schlüsselerweiterung 23 bestimmt ist.

Falls diese Prüfung beim Erzeugen des erweiterten geheimen Schlüssels 37 bereits in Schritt S800 (*mergekey*) erfolgt, wird der erweiterte geheime Schlüssel 37 nur dann erzeugt, wenn die Identifikationsmerkmale des geheimen Schlüssels 21 und der Schlüsselerweiterung 23 miteinander korrespondieren. Alternativ, und bevorzugt, werden der geheime Schlüssel 21 und die Schlüsselerweiterung 23 in Schritt S800 aber ohne weitere Prüfung miteinander fusioniert und es wird erst beim Entschlüsseln eines verschlüsselten Softwaremodells 22 in Schritt S900 (*dec*) geprüft, ob deren Identifikationsmerkmale korrespondieren. Falls in Schritt S900 festgestellt wird, dass die Identifikationsmerkmale korrespondieren, werden sämtliche Komponentengruppen 42 entschlüsselt, deren Definition entweder in den ursprünglichen geheimen Schlüssel 21 oder in die Schlüsselerweiterung 23 integriert waren. Falls die Identifikationsmerkmale nicht korrespondieren, wird die Verschlüsselung entweder abgebrochen, da keine ausreichende Berechtigung vorliegt oder es werden weiterhin nur diejenigen Komponentengruppen 42 entschlüsselt, die bereits mittels des ursprünglichen geheimen Schlüssels 21 entschlüsselt werden konnten.

Die Identifikationsmerkmale können auf vielfältige Weise ausgestaltet und strukturiert sein, zum Beispiel als Zufallszahl oder Hashwert, oder auch weitere Informationen tragen, zum Beispiel zu dem Entwickler, dem geheimen Schlüssel oder der weiteren Komponentengruppe, für deren Entschlüsselung der Entwickler zusätzlich berechtigt werden soll. Prinzipiell müssen die Identifikationsmerkmale der Schlüsselerweiterung 23 und des geheimen Schlüssels 21 nicht identisch sein, sondern nur verifizierbar, das heißt mittels eines geeigneten Algorithmus vergleichbar. Auch kann das Identifikationsmerkmal zusätzlich in das verschlüsselten Softwaremodell 22 integriert sein, zum Beispiel derart, dass jede Komponente 40 zumindest einen Teil des Identifikationsmerkmals trägt. In diesem Fall kann in Schritt S900 eine Komponentengruppe 42 nur dann entschlüsselt werden, wenn alle Komponenten 40 dieser Komponentengruppe 42 zumindest Teile des Identifikationsmerkmals des eingesetzten geheimen Schlüssels 21 tragen.

Das Verfahren gemäß Figur 7 erlaubt es also, die Zugriffsberechtigungen eines geheimen Schlüssels 21 zu erweitern, ohne dass das verschlüsselte Softwaremodell 22 geändert werden muss, sofern die Definitionen der Schlüsselerweiterung 23 bereits in der ursprünglichen Entschlüsselungsstruktur 17 und damit in dem verschlüsselten Softwaremodell 22 vorhanden ist. Falls eine gänzlich neue Komponentengruppe 42 des Softwaremodells 16 definiert wurde, deren Definition die Schlüsselerweiterung 23 trägt, muss das Softwaremodell 16 mit einer entsprechend neuen bzw. erweiterten Entschlüsselungsstruktur 17 neu verschlüsselt und an den Entwickler übergeben werden.

## Patentansprüche

1. Computerimplementiertes Verfahren zum Verschlüsseln eines Softwarekomponenten (40) umfassenden Softwaremodells (16) eines technischen Systems, **gekennzeichnet durch** die Schritte:
- Erzeugen (S1; S100) eines öffentlichen Schlüssels (19) und eines Masterschlüssels;
- Erzeugen (S3) einer Entschlüsselungsstruktur (17), die zumindest eine Definition einer Komponentengruppe (42) von Softwarekomponenten (40) des Softwaremodells (16) umfasst;
- Erzeugen (S3; S300) zumindest eines geheimen Schlüssels (21) mittels des Masterschlüssels und der Entschlüsselungsstruktur (17) derart, dass der geheime Schlüssel (21) die Definition der zumindest einen Komponentengruppe (42) umfasst,
- Zumindest teilweises Verschlüsseln (S5; S200) des Softwaremodells (16) mittels des öffentlichen Schlüssels (19);
- Zumindest teilweises Integrieren der Entschlüsselungsstruktur (17) in das verschlüsselte Softwaremodell (22) derart, dass die zumindest eine Komponentengruppe (42) nur mittels des geheimen Schlüssels (21) entschlüsselbar ist, der die Definition der zumindest einen Komponentengruppe (42) umfasst;
- Erzeugen (S8) einer weiteren Entschlüsselungsstruktur (17) die zumindest eine weitere Komponentengruppe (42) von Softwarekomponenten (40) des Softwaremodells (16) definiert;
- Erzeugen (S9; S700) einer Schlüsselerweiterung (23) für den zumindest einen geheimen Schlüssel (21) mittels des Masterschlüssels und der weiteren Entschlüsselungsstruktur derart, dass die Schlüsselerweiterung (23) die Definition der zumindest einen weiteren Komponentengruppe (42) umfasst.

2. Verfahren nach Anspruch 1, **dadurch gekennzeichnet, dass** die Entschlüsselungsstruktur (17) erzeugt wird (S2) durch Zuweisen von Attributen (41) an die Softwarekomponenten (40) und Definieren zumindest einer Komponentengruppe (42) aus denjenigen Softwarekomponenten (40), denen zumindest ein bestimmtes Attribut (41) zugewiesen wurde.

3. Verfahren nach Anspruch 2, **dadurch gekennzeichnet, dass** die Softwarekomponenten (40) innerhalb des Softwaremodells (16) hierarchisch miteinander in Beziehung stehen, wobei den Softwarekomponenten (40) Attribute (41) derart zugewiesen werden, dass jede Softwarekomponente (40) zumindest ein gemeinsames Attribut (41) mit einer hierarchisch übergeordneten Softwarekomponente (40) besitzt.

4. Verfahren nach einem der Ansprüche 1 bis 3, **dadurch gekennzeichnet, dass** die Softwarekomponenten (40) innerhalb des Softwaremodells (16) hierarchisch miteinander in Beziehung stehen, wobei die Entschlüsselungsstruktur (17) derart erzeugt wird (S2), dass eine Komponentengruppe (42) für jede Softwarekomponente (40) auch eine hierarchisch übergeordnete Softwarekomponente (40) umfasst.

5. Verfahren nach einem der Ansprüche 1 bis 4, **dadurch gekennzeichnet, dass** die Entschlüsselungsstruktur (17) derart erzeugt wird (S2), dass die zumindest eine Komponentengruppe (42) einen autonomen Teil des Softwaremodells (16) bildet.

6. Verfahren nach einem der Ansprüche 1 bis 5, **dadurch gekennzeichnet, dass** das Softwaremodell (16) triviale Softwarekomponenten (40) und/oder essentielle Softwarekomponenten (40) umfasst, wobei die Entschlüsselungsstruktur (17) derart erzeugt wird (S2), dass die zumindest eine Komponentengruppe (42) alle trivialen Softwarekomponenten (40) und/oder alle essentiellen Softwarekomponenten (40) umfasst.

7. Verfahren nach Anspruch 2, **dadurch gekennzeichnet, dass** beim Erzeugen (S3; S300) des geheimen Schlüssels (21) das zumindest eine bestimmte Attribut (41) in den geheimen Schlüssel (21) integriert wird.

8. Verfahren nach einem der Ansprüche 1 bis 7, **gekennzeichnet dadurch, dass**
das technische System ein Steuergerät und/oder eines von einem Steuergerät gesteuerten oder geregelten Systems ist.

9. Verfahren nach Anspruch 2, **dadurch gekennzeichnet, dass** die weitere Entschlüsselungsstruktur erzeugt wird (S8) durch Definieren zumindest einer weiteren Komponentengruppe (42) aus denjenigen Softwarekomponenten (40), denen zumindest ein bestimmtes, weiteres Attribut (41) zugewiesen wurde, und dass beim Erzeugen (S9; S700) der Schlüsselerweiterung (23) das zumindest eine weitere, bestimmte Attribut (41) in die Schlüsselerweiterung (23) integriert wird.

10. Verfahren nach Anspruch 1 oder 9, **dadurch gekennzeichnet, dass** beim Erzeugen (S9; S700) der Schlüsselerweiterung (23) ein Identifikationsmerkmal des geheimen Schlüssels (21) in die Schlüsselerweiterung (23) integriert wird.

11. Verfahren nach einem der Ansprüche 1 bis 10, **dadurch gekennzeichnet, dass** die Schlüsselerweiterung (23) derart erzeugt wird (S9; S700), dass die zumindest eine weitere Komponentengruppe (42) nur von einem erweiterten geheimen Schlüssel (37) entschlüsselt werden kann, der aus dem geheimen Schlüssel (21) und der Schlüsselerweiterung (23) gebildet wird.

12. Computerimplementiertes Verfahren zum Entschlüsseln eines gemäß einem Verfahren nach einem der Ansprüche 1 bis 6 verschlüsselten Softwaremodells (16) mittels eines gemäß einem Verfahren nach einem der Ansprüche 1 erzeugten geheimen Schlüssels (21), **dadurch gekennzeichnet, dass** die zumindest eine Komponentengruppe (42) nur entschlüsselt wird (S7; S500), wenn die in das verschlüsselte Softwaremodell (22) zumindest teilweise integrierte Entschlüsselungsstruktur (17) die zumindest eine Komponentengruppe (42) definiert und der geheime Schlüssel (21) die Definition der zumindest einen Komponentengruppe (42) umfasst.

13. Verfahren nach Anspruch 12, **dadurch gekennzeichnet, dass** zum Entschlüsseln (S7; S500) des verschlüsselten Softwaremodells (22) durch den geheimen Schlüssel (21) geprüft wird, ob einer Softwarekomponente (40) des verschlüsselten Softwaremodells (22) zumindest das zumindest eine vorgegebene Attribut (41) zugewiesen ist, welches in den geheimen Schlüssel (21) integriert ist.

14. Verfahren nach Anspruch 12 oder 13, **dadurch gekennzeichnet, dass** aus dem geheimen Schlüssel (21) und der mit einem Verfahren gemäß einem der Ansprüche 9 bis 12 erzeugten Schlüsselerweiterung (23) ein erweiterter geheimer Schlüssel (37) gebildet wird (S13; S800), indem die Definition der zumindest einen weiteren Komponentengruppe (42) in den geheimen Schlüssel (21) derart integriert wird, dass die zumindest eine weitere Komponentengruppe (42) mittels des erweiterten geheimen Schlüssels (37) entschlüsselt werden kann, wenn eine in das verschlüsselte Softwaremodell (22; 24) zumindest teilweise integrierte Entschlüsselungsstruktur (17) die zumindest eine weitere Komponentengruppe (42) definiert.

15. Verfahren nach Anspruch 14, **dadurch gekennzeichnet, dass** beim Bilden (S13; S800) des erweiterten geheimen Schlüssels (37) das zumindest eine weitere, bestimmte Attribut (41) in den geheimen Schlüssel (21) integriert wird.

16. Verfahren nach Anspruch 14 oder 15, **dadurch gekennzeichnet, dass** beim Bilden (S13; S800) des erweiterten geheimen Schlüssels (37) ein Identifikationsmerkmal der Schlüsselerweiterung (23) und ein Identifikationsmerkmal des geheimen Schlüssels (21) in den erweiterten geheimen Schlüssel (37) integriert werden, wobei die zumindest eine Komponentengruppe (42) mittels des erweiterten geheimen Schlüssels (37) nur dann entschlüsselt wird (S14; S900), wenn das Identifikationsmerkmal der Schlüsselerweiterung (23) und das Identifikationsmerkmal des geheimen Schlüssels (21) miteinander korrespondieren.

17. Elektronischer Datensatz (22; 24), umfassend ein Softwarekomponenten (40) umfassendes Softwaremodell (16), das gemäß einem Verfahren nach einem der Ansprüche 1 bis 11 verschlüsselt ist, sowie eine Entschlüsselungsstruktur (17), die zumindest eine Komponentengruppe (42) von Softwarekomponenten (40) des Softwaremodells (16) definiert, wobei der Datensatz (22; 24) derart ausgestaltet ist, dass das verschlüsselte Softwaremodell (22) gemäß einem Verfahren nach einem der Ansprüche 12 bis 16 entschlüsselbar ist.

18. Verschlüsselungsvorrichtung zur Datenverarbeitung (11), eingerichtet, um ein Softwarekomponenten (40) umfassendes Softwaremodell (16) gemäß einem Verfahren nach den Ansprüche 1 bis 11 zu verschlüsseln.

19. Entschlüsselungsvorrichtung zur Datenverarbeitung (31), eingerichtet, um ein Softwarekomponenten (40) umfassendes, verschlüsseltes Softwaremodell (22) gemäß einem Verfahren nach den Ansprüche 12 bis 16 zu entschlüsseln.

20. Entwicklungsumgebung (10, 30) zur Entwicklung eines Softwarekomponenten (40) umfassenden Softwaremodells (16), umfassend eine Verschlüsselungsvorrichtung (11) nach Anspruch 18 und/oder eine Entschlüsselungsvorrichtung (31) nach Anspruch 19.

## Claims

1. A computer-implemented method for encrypting a software model (16) of a technical system, comprising software components (40), **characterized by** the steps:
- generating (S1; S100) a public key (19) and a master key;
- generating (S3) a decrypting structure (17) comprising at least one definition of a component group (42) of software components (40) of the software model (16);
- generating (S3; S300) at least one secret key (21) by means of the master key and the decrypting structure (17), such that the secret key (21) comprises the definition of the at least one component group (42),
- at least partially encrypting (S5; S200) the software model (16) by means of the public key (19);
- at least partially integrating the decrypting structure (17) into the encrypted software model (22), such that the at least one component group (42) can be decrypted only by means of the secret key (21) comprising the definition of the at least one component group (42);
- generating (S8) a further decrypting structure (17) comprising at least one definition of a further component group (42) of software components (40) of the software model (16);
- generating (S9; S700) a key expansion (23) for the at least one secret key (21) by means of the master key and the further decrypting structure, such that the key expansion (23) comprises the definition of the at least one further component group (42).

2. The method according to claim 1, **characterized in that** the decrypting structure (17) is generated (S2) by assigning attributes (41) to the software components (40) and defining at least one component group (42) from those software components (40) to which at least one particular attribute (41) has been assigned.

3. The method according to claim 2, **characterized in that** the software components (40) within the software model (16) have a hierarchal relationship to each other, wherein the software components (40) are assigned attributes (41), such that each software component (40) has at least one attribute (41) in common with a hierarchally higher-ranked software component (40).

4. The method according to any one of the claims 1 through 3, **characterized in that** the software components (40) within the software model (16) have a hierarchal relationship to each other, wherein the decrypting structure (17) is generated (S2) such that one component group (42) for each software component (40) also comprises one hierarchally higher-ranked software component (40).

5. The method according to any one of the claims 1 through 4, **characterized in that** the decrypting structure (17) is generated (S2) such that the at least one component group (42) forms an autonomous part of the software model (16).

6. The method according to any one of the claims 1 through 5, **characterized in that** the software model (16) comprises trivial software components (40) and/or essential software components (40), wherein the decrypting structure (17) is generated (S2) such that the at least one component group (42) comprises all of the trivial software components (40) and/or all of the essential software components (40).

7. The method according to claim 2, **characterized in that** when generating (S3; S300) the secret key (21), the at least one particular attribute (41) is integrated in the secret key (21) .

8. The method according to any one of the claims 1 through 7, **characterized in that** the technical system is a control unit and/or a system controlled or regulated by a control unit.

9. The method according to claim 2, **characterized in that** the further decrypting structure is generated (S8) by defining at least one further component group (42) from those software components (40) to which at least one particular, further attribute (41) has been assigned, and that when generating (S9; S700) the key expansion (23) the at least one further, particular attribute (41) is integrated in the key expansion (23).

10. The method according to claim 1 or 9, **characterized in that** when generating (S9; S700) the key expansion (23), an identification feature of the secret key (21) is integrated in the key expansion (23).

11. The method according to any one of the claims 1 through 10, **characterized in that** the key expansion (23) is generated (S9; S700) such that the at least one further component group (42) can be decrypted only by a further secret key (37) formed from the secret key (21) and the key expansion (23) .

12. A computer-implemented method for decrypting a software model (16) encrypted according to a method according to any one of the claims 1 through 6 by means of a secret key (21) generated according to a method according to claim 1, **characterized in that** the at least one component group (42) is decrypted (S7; S500) only if the decrypting structure (17) at least partially integrated in the encrypted software model (22) defines the at least one component group (42) and the secret key (21) comprises the definition of the at least one component group (42).

13. The method according to claim 12, **characterized in that** for decrypting (S7; S500) the encrypted software model (22) by the secret key (21), it is checked whether a software component (40) of the encrypted software model (22) has been assigned at least the at least one specified attribute (41) integrated in the secret key (21).

14. The method according to claim 12 or 13, **characterized in that** an expanded secret key (37) is formed (S13; S800) from the secret key (21) and the key expansion (23) generated by means of a method according any one of the claims 9 through 12, **in that** the definition of the at least one further component group (42) is integrated in the secret key (21) such that the at least one further component group (42) can be decrypted by means of the expanded secret key (37) if a decrypting structure (17) at least partially integrated in the encrypted software model (22; 24) defines the at least one further component group (42).

15. The method according to claim 14, **characterized in that** when forming (S13; S800) the expanded secret key (37), the at least one further, particular attribute (41) is integrated in the secret key (21).

16. The method according to claim 14 or 15, **characterized in that** when forming (S13; S800) the expanded secret key (37), an identification feature of the key expansion (23) and an identification feature of the secret key (21) are integrated in the expanded secret key (37), wherein the at least one component group (42) is decrypted (S14; S900) by means of the expanded secret key (37) only when the identification feature of the key expansion (23) and the identification feature of the secret key (21) correspond to each other.

17. An electronic data set (22; 24) comprising a software model (16) comprising software components (40) and encrypted according to a method according to any one of the claims 1 through 11, and a decrypting structure (17) defining at least one component group (42) of software components (40) of the software model (16), wherein the data set (22; 24) is designed such that the encrypted software model (22) can be decrypted according to a method according to any one of the claims 12 through 16.

18. An encrypting device for processing data (11), set up for encrypting a software model (16) comprising software components (40) according to a method according to the claims 1 through 11.

19. A decrypting device for processing data (31), set up for decrypting an encrypted software model (22) comprising software components (40) according to a method according to the claims 12 through 16.

20. A development environment (10, 30) for developing a software model (16) comprising software components (40) and comprising an encrypting device (11) according to claim 18 and/or a decrypting device (31) according to claim 19.

## Revendications

1. Procédé mis en œuvre sur ordinateur pour crypter un modèle de logiciel (16) d'un système technique comprenant des composants logiciels (40), **caractérisé par** les étapes consistant à :
- générer (S1; S100) une clé publique (19) et une clé principale ;
- générer (S3) une structure de décryptage (17) qui comprend au moins une définition d'un groupe de composants (42) de composants logiciels (40) du modèle logiciel (16) ;
- générer (S3 ; S300) au moins une clé secrète (21) au moyen de la clé principale et de la structure de décryptage (17) de sorte que la clé secrète (21) comprenne la définition de l'au moins un groupe de composants (42),
- crypter (S5; S200) au moins partiellement le modèle de logiciel (16) au moyen de la clé publique (19) ;
- intégrer au moins partiellement la structure de décryptage (17) dans le modèle de logiciel (22) crypté de sorte que le, au moins un, groupe de composants (42) ne soit décryptable qu'au moyen de la clé secrète (21) qui comprend la définition de l'au moins un groupe de composants (42) ;
- générer (S8) une structure de décryptage (17) supplémentaire qui définit au moins un groupe de composants (42) supplémentaire de composants logiciels (40) du modèle logiciel (16) ;
- générer (S9 ; S700) une extension de clé (23) pour la, au moins une, clé secrète (21) au moyen de la clé principale et de la structure de décryptage supplémentaire de sorte que l'extension de clé (23) comprenne la définition de l'au moins un groupe de composants (42) supplémentaire.

2. Procédé selon la revendication 1, **caractérisé en ce que** la structure de décryptage (17) est générée (S2) par attribution d'attributs (41) aux composants logiciels (40) et par définition d'au moins un groupe de composants (42) à partir des composants logiciels (40) auxquels au moins un attribut (41) particulier a été attribué.

3. Procédé selon la revendication 2, **caractérisé en ce que** les composants logiciels (40) sont hiérarchiquement en relation les uns avec les autres au sein du modèle logiciel (16), dans lequel des attributs (41) sont attribués aux composants logiciels (40) de sorte que chaque composant logiciel (40) possède au moins un attribut (41) commun avec un composant logiciel (40) hiérarchiquement supérieur.

4. Procédé selon l'une quelconque des revendications 1 à 3, **caractérisé en ce que** les composants logiciels (40) sont hiérarchiquement en relation les uns avec les autres au sein du modèle logiciel (16), dans lequel la structure de décryptage (17) est générée (S2) de sorte qu'un groupe de composants (42) pour chaque composant logiciel (40) comprend également un composant logiciel (40) hiérarchiquement supérieur.

5. Procédé selon l'une quelconque des revendications 1 à 4, **caractérisé en ce que** la structure de décryptage (17) est générée (S2) de sorte que le, au moins un, groupe de composants (42) forme une partie autonome du modèle logiciel (16) .

6. Procédé selon l'une quelconque des revendications 1 à 5, **caractérisé en ce que** le modèle logiciel (16) comprend des composants logiciels (40) triviaux et/ou des composants logiciels (40) essentiels, dans lequel la structure de décryptage (17) est générée (S2) de sorte que le, au moins un, groupe de composants (42) comprend tous les composants logiciels (40) triviaux et/ou tous les composants logiciels (40) essentiels.

7. Procédé selon la revendication 2, **caractérisé en ce que** lors de la génération (S3 ; S300) de la clé secrète (21), l'au moins un attribut (41) particulier est intégré dans la clé secrète (21).

8. Procédé selon l'une quelconque des revendications 1 à 7, **caractérisé en ce que** le système technique est un appareil de commande et/ou un système commandé ou régulé par un appareil de commande.

9. Procédé selon la revendication 2, **caractérisé en ce que** la structure de décryptage supplémentaire est générée (S8) par définition d'au moins un groupe de composants (42) supplémentaire à partir des composants logiciels (40) auxquels au moins un attribut (41) particulier supplémentaire a été attribué, et **en ce que**, lors de la génération (S9 ; S700) de l'extension de clé (23), l'au moins un attribut (41) particulier supplémentaire est intégré dans l'extension de clé (23).

10. Procédé selon la revendication 1 ou 9, **caractérisé en ce que** lors de la génération (S9 ; S700) de l'extension de clé (23), une caractéristique d'identification de la clé secrète (21) est intégrée dans l'extension de clé (23).

11. Procédé selon l'une quelconque des revendications 1 à 10, **caractérisé en ce que** l'extension de clé (23) est générée (S9 ; S700) de sorte que l'au moins un groupe de composants (42) supplémentaire ne peut être décrypté que par une clé secrète (37) étendue qui est formée à partir de la clé secrète (21) et de l'extension de clé (23).

12. Procédé mis en œuvre sur ordinateur pour décrypter un modèle logiciel (16) crypté selon un procédé selon l'une quelconque des revendications 1 à 6 au moyen d'une clé secrète (21) générée selon un procédé *selon la revendication 1,* **caractérisé en ce que** l'au moins un groupe de composants (42) n'est décrypté (S7; S500) que si la structure de décryptage (17) intégrée au moins partiellement dans le modèle logiciel (22) crypté définit l'au moins un groupe de composants (42) et la clé secrète (21) comprend la définition de l'au moins un groupe de composants (42).

13. Procédé selon la revendication 12, **caractérisé en ce que** pour le décryptage (S7; S500) du modèle logiciel (22) crypté, il est vérifié par la clé secrète (21) si au moins l'au moins un attribut (41) prédéterminé, qui est intégré dans la clé secrète (21), est attribué à un composant logiciel (40) du modèle logiciel (22) crypté.

14. Procédé selon la revendication 12 ou 13, **caractérisé en ce qu'**à partir de la clé secrète (21) et de l'extension de clé (23) générée par un procédé selon l'une quelconque des revendications 9 à 12, une clé secrète étendue (37) est formée (S13 ; S800) par intégration de la définition de l'au moins un groupe de composants (42) supplémentaire dans la clé secrète (21) de sorte que l'au moins un groupe de composants supplémentaire (42) puisse être décrypté au moyen de la clé secrète étendue (37) si une structure de décryptage (17) intégrée au moins partiellement dans le modèle logiciel crypté (22 ; 24) définit l'au moins un groupe de composants (42) supplémentaire.

15. Procédé selon la revendication 14, **caractérisé en ce que** lors de la formation (S13 ; S800) de la clé secrète étendue (37), l'au moins un attribut (41) supplémentaire particulier est intégré dans la clé secrète (21).

16. Procédé selon la revendication 14 ou 15, **caractérisé en ce que** lors de la formation (S13 ; S800) de la clé secrète étendue (37), une caractéristique d'identification de l'extension de clé (23) et une caractéristique d'identification de la clé secrète (21) sont intégrées dans la clé secrète étendue (37), dans lequel le, au moins un, groupe de composants (42) n'est décrypté (S14 ; S900) à l'aide de la clé secrète étendue (37) que si la caractéristique d'identification de l'extension de clé (23) et la caractéristique d'identification de la clé secrète (21) correspondent l'une à l'autre.

17. Ensemble de données électronique (22 ; 24) comprenant un modèle logiciel (16) comprenant des composants logiciels (40), qui est crypté selon un procédé selon l'une quelconque des revendications 1 à 11, ainsi qu'une structure de décryptage (17) qui définit au moins un groupe de composants (42) de composants logiciels (40) du modèle logiciel (16), dans lequel l'ensemble de données (22 ; 24) est configuré de sorte que le modèle logiciel crypté (22) est décryptable selon un procédé selon l'une quelconque des revendications 12 à 16.

18. Dispositif de cryptage en vue du traitement de données (11), configuré pour crypter un modèle logiciel (16) comprenant des composants logiciels (40) selon un procédé selon les revendications 1 à 11.

19. Dispositif de décryptage en vue du traitement de données (31), configuré pour décrypter un modèle logiciel (22) crypté comprenant des composants logiciels (40) selon un procédé selon les revendications 12 à 16.

20. Environnement de développement (10, 30) pour le développement d'un modèle logiciel (16) comprenant des composants logiciels (40), comprenant un dispositif de cryptage (11) selon la revendication 18 et/ou un dispositif de décryptage (31) selon la revendication 19.
